# EUROPEAN PATENT APPLICATION

(11) **EP 3 733 378 A1**
(43) Date of publication of application: **04.11.2020**
(21) Application number: 20158843.1
(22) Date of filing: 21.02.2020
(51) Int. Cl.: B29C 64/165, B33Y 10/00, B33Y 30/00, B29C 64/291, B29C 64/205, B33Y 70/00

(54) **THREE-DIMENSIONAL OBJECT PRODUCING APPARATUS AND THREE- DIMENSIONAL OBJECT PRODUCING METHOD**

(30) Priority: 20.03.2019 JP 2019053734; 06.11.2019 JP 2019201366
(71) Applicant: Ricoh Company, Ltd., Tokyo 143-8555 (JP)
(72) Inventor: MIYATA, Hiroyuki, Tokyo, 143-8555 (JP); PARK, Soyoung, Tokyo, 143-8555 (JP); NAKAZAWA, Souichi, Tokyo, 143-8555 (JP); YAMAGUCHI, Daichi, Tokyo, 143-8555 (JP)
(74) Representative: J A Kemp LLP

(57) **Abstract**

Provided is a three-dimensional object producing apparatus (601) including: a layer forming unit (12) configured to form a particle layer (31) containing resin particles (20); a discharging unit (52) configured to discharge a model material (10) capable of absorbing energy to the particle layer (31) to form a model region (101); and a heating unit (80) configured to heat the particle layer (31) in which the model region (101) is formed through application of the energy, to fuse the resin particles (20) in the model region (101) with each other, wherein the discharging unit (52) discharges the model material (10) in a manner that portions adjoining each other in the model region (101) are varied in capacity for absorbing the energy.

## Description

### BACKGROUND OF THE INVENTION

### Field of the Invention

The present disclosure relates to a three-dimensional object producing apparatus and a three-dimensional object producing method.

### Description of the Related Art

Because of, for example, the capability of producing three-dimensional objects having a high strength, there has been a growing interest in apparatuses configured to form three-dimensional objects by repeating lamination of object forming layers (layered objects) formed by solidifying particle layers (powder layers) containing resin particles. As the apparatuses configured to form three-dimensional objects by repeating lamination of object forming layers formed by solidifying particle layers, for example, there have been known HSS (High Speed Sintering)-type apparatuses, SLS (Selective Laser Sintering)-type apparatuses, and BJ (Binder Jetting)-type apparatuses.

Among these types, HSS-type apparatuses are attracting a particular attention because the apparatuses are low-cost (low-priced) and three-dimensional objects can be formed in a short time.

HSS-type apparatuses are configured to form object forming layers by discharging a light-absorbing ink containing, for example, carbon black from an inkjet head to a predetermined position of a particle layer, and subsequently heating the particle layer with a light source such as a halogen lamp to solidify the predetermined position of the particle layer. HSS-type apparatuses form three-dimensional objects by laminating object forming layers by repeating formation of object forming layers.

For HSS-type apparatuses, there has been proposed a technique of controlling the concentration of an absorbent (coalescent) at, for example, around the portion to be solidified, in order to prevent unneeded transmission of heat (for example, see Japanese Translation of PCT International application No. JP-T-2018-502750).

In order to improve target properties of an object such as strength, density, color, and thermal properties, there has been a known technique of applying a mixture of a binder and a carrier to an object forming region at a predetermined binder concentration and a predetermined contone density (for example, see United States Patent Application Publication No. 2018/0065297).

The present disclosure has an object to provide a three-dimensional object producing apparatus capable of suppressing deformation of a three-dimensional object formed by heating resin particles and improving the object formation accuracy of the three-dimensional object.

### SUMMARY OF THE INVENTION

According to one aspect of the present disclosure, a three-dimensional object producing apparatus includes a layer forming unit configured to form a particle layer containing resin particles, a discharging unit configured to discharge a model material capable of absorbing energy to the particle layer to form a model region, and a heating unit configured to heat the particle layer in which the model region is formed through application of energy, to fuse the resin particles in the model region with each other. The discharging unit discharges the model material in a manner that portions adjoining each other in the model region are varied in capacity for absorbing the energy.

The present disclosure can provide a three-dimensional object producing apparatus capable of suppressing deformation of a three-dimensional object formed by heating resin particles and improving the object formation accuracy of the three-dimensional object.

### BRIEF DESCRIPTION OF THE DRAWINGS

FIG. 1A is a cross-sectional view exemplarily illustrating an example behavior of a model material to permeate a k-th layer when liquid droplets of the model material are discharged to the k-th layer;
FIG. 1B is an exemplary view illustrating an example interval between liquid droplets when the liquid droplets are discharged;
FIG. 2 is a schematic plan view of a three-dimensional object producing apparatus of the present disclosure according to an embodiment;
FIG. 3 is a schematic side view of a three-dimensional object producing apparatus of the present disclosure according to an embodiment;
FIG. 4 is a schematic side view illustrating an object forming section of a three-dimensional object producing apparatus of the present disclosure according to an embodiment;
FIG. 5 is a block diagram illustrating an example configuration of a controlling section of a three-dimensional object producing apparatus of the present disclosure according to an embodiment;
FIG. 6A is an exemplary view illustrating an example flow of forming a three-dimensional object;
FIG. 6B is an exemplary view illustrating an example flow of forming a three-dimensional object;
FIG. 6C is an exemplary view illustrating an example flow of forming a three-dimensional object;
FIG. 6D is an exemplary view illustrating an example flow of forming a three-dimensional object;
FIG. 6E is an exemplary view illustrating an example flow of forming a three-dimensional object;
FIG. 6F is an exemplary view illustrating an example flow of forming a three-dimensional object;
FIG. 7A is a view illustrating an example flow of forming a model part according to an existing technique;
FIG. 7B is a view illustrating an example flow of forming a model part according to an existing technique;
FIG. 7C is a view illustrating an example flow of forming a model part according to an existing technique;
FIG. 7D is a view illustrating an example flow of forming a model part according to an existing technique;
FIG. 8A is a view illustrating an example concentration distribution of an energy absorbent of a model material according to an existing technique;
FIG. 8B is a view illustrating an example temperature distribution when a particle layer is cooled after heated in the case of the concentration distribution illustrated in FIG. 8A;
FIG. 9A is a view illustrating an example concentration distribution of an energy absorbent of a model material according to a first embodiment;
FIG. 9B is a view illustrating an example temperature distribution when a particle layer is cooled after heated in the case of the concentration distribution illustrated in FIG. 9A;
FIG. 10A is a view illustrating an example flow of forming a desired concentration distribution of an energy absorbent in a model region of one particle layer according to a first embodiment;
FIG. 10B is a view illustrating an example flow of forming a desired concentration distribution of an energy absorbent in a model region of one particle layer according to a first embodiment;
FIG. 10C is a view illustrating an example flow of forming a desired concentration distribution of an energy absorbent in a model region of one particle layer according to a first embodiment;
FIG. 10D is a view illustrating an example flow of forming a desired concentration distribution of an energy absorbent in a model region of one particle layer according to a first embodiment;
FIG. 11A is a view illustrating an example flow when a layer forming unit forms a second particle layer after the layer forming unit forms a first particle layer and a discharging unit forms a first model region according to a first embodiment;
FIG. 11B is a view illustrating an example flow when a layer forming unit forms a second particle layer after the layer forming unit forms a first particle layer and a discharging unit forms a first model region according to a first embodiment;
FIG. 11C is a view illustrating an example flow when a layer forming unit forms a second particle layer after the layer forming unit forms a first particle layer and a discharging unit forms a first model region according to a first embodiment;
FIG. 11D is a view illustrating an example flow when a layer forming unit forms a second particle layer after the layer forming unit forms a first particle layer and a discharging unit forms a first model region according to a first embodiment;
FIG. 11E is a view illustrating an example flow when a layer forming unit forms a second particle layer after the layer forming unit forms a first particle layer and a discharging unit forms a first model region according to a first embodiment;
FIG. 12 is a flowchart illustrating an example flow of forming a model part corresponding to one layer when a layer forming unit forms a second particle layer after the layer forming unit forms a first particle layer and a discharging unit forms a first model region according to a first embodiment;
FIG. 13 is a view illustrating another example distribution of the concentration of an energy absorbent of a model material according to a first embodiment;
FIG. 14 is a view illustrating another example distribution of the concentration of an energy absorbent of a model material according to a first embodiment;
FIG. 15 is a view illustrating an example of how a dent (sink) occurs when forming a second particle layer over a first particle layer according to an existing technique;
FIG. 16 is a view illustrating an example distribution of a model material when forming a second particle layer over a first particle layer according to a second embodiment;
FIG. 17 is a view illustrating an example of how a model material permeates when setting an amount of the model material to be discharged to a lower amount according to an existing technique;
FIG. 18 is a view illustrating an example of how a model material permeates when setting an amount of the model material to be discharged to a lower amount according to a second embodiment;
FIG. 19 is a view illustrating an example distribution of a model material when four particle layers are formed according to a second embodiment;
FIG. 20 is a view illustrating an example of how drooping of a model part (upper surface collapse) occurs when a second particle layer is formed over a first particle layer according to an existing technique;
FIG. 21 is a view illustrating an example distribution of a model material when a second particle layer is formed over a first particle layer according to a third embodiment;
FIG. 22 is a view illustrating an example distribution of a model material when a second particle layer is formed over a first particle layer with model materials having different compositions according to a third embodiment;
FIG. 23 is a view illustrating an example distribution of a model material when a second particle layer is formed over a first particle layer with a model material of the same composition according to a third embodiment;
FIG. 24A is a diagram illustrating an example of a permeating state of a model material according to an existing technique to a fourth embodiment;
FIG. 24B is a diagram illustrating another example of a permeating state of a model material according to an existing technique to a fourth embodiment;
FIG. 24C is a diagram illustrating another example of a permeating state of a model material according to an existing technique to a fourth embodiment;
FIG. 24D is a diagram illustrating another example of a permeating state of a model material according to an existing technique to a fourth embodiment;
FIG. 25A is a diagram illustrating an example of a permeating state of a model material according to a fourth embodiment;
FIG. 25B is a diagram illustrating another example of a permeating state of a model material according to a fourth embodiment;
FIG. 25C is a diagram illustrating another example of a permeating state of a model material according to a fourth embodiment; and
FIG. 25D is a diagram illustrating another example of a permeating state of a model material according to a fourth embodiment.

### DESCRIPTION OF THE EMBODIMENTS

### (Three-dimensional object producing apparatus and three-dimensional object producing method)

A three-dimensional object producing apparatus of the present disclosure includes a layer forming unit configured to form a particle layer containing resin particles, a discharging unit configured to discharge a model material capable of absorbing energy to the particle layer to form a model region, and a heating unit configured to heat the particle layer in which the model region is formed through application of energy, to fuse the resin particles in the model region with each other. The three-dimensional object producing apparatus further includes other units as needed.

A three-dimensional object producing method of the present disclosure includes a layer forming step of forming a particle layer containing resin particles, a discharging step of discharging a model material capable of absorbing energy to the particle layer to form a model region, and a heating step of heating the particle layer in which the model region is formed through application of energy, to fuse the resin particles in the model region with each other. The three-dimensional object producing method further includes other steps as needed.

A three-dimensional object producing method of the present disclosure can be suitably performed by the three-dimensional object producing apparatus of the present disclosure. The layer forming step can be suitably performed by the layer forming unit. The discharging step can be suitably performed by the discharging unit. The heating step can be suitably performed by the heating unit. The other steps can be performed by the other units.

That is, the three-dimensional object producing apparatus of the present disclosure is the same as performing the three-dimensional object producing method of the present disclosure. Hence, the details of the three-dimensional object producing method of the present disclosure will also be specified through description of the three-dimensional object producing apparatus of the present disclosure.

The three-dimensional object producing apparatus of the present disclosure is based on a finding that with existing three-dimensional object producing apparatuses, a three-dimensional object to be formed by heating resin particles may deform during formation and may have a low object formation accuracy.

According to existing techniques, temperature variation in a particle layer during object formation, particularly temperature variation in a model part (model region), which constitutes a part of a three-dimensional object, in the particle layer may become a problem. Specifically, with existing three-dimensional object producing apparatuses, for example, temperature variation in a particle layer (object forming layer) including a model part during slow cooling of the object forming layer may induce deformation, such as warpage of a three-dimensional object. Further, existing three-dimensional object producing apparatuses form objects without taking into consideration the heated condition of a particle layer immediately below a particle layer to be heated by a heating unit (i.e., a particle layer formed immediately before). Therefore, a "dent (sink)" may occur in the model part, or "upper surface collapse", which is drooping of the model part in the gravity direction, may occur.

The present disclosure includes a layer forming unit configured to form a particle layer containing resin particles, a discharging unit configured to discharge a model material capable of absorbing energy to the particle layer to form a model region, and a heating unit configured to heat the particle layer in which the model region is formed through application of energy, to fuse the resin particles in the model region with each other. In addition, the discharging unit of the present disclosure is configured to discharge the model material in a manner that portions adjoining each other in the model region are varied in energy absorbing capacity.

With this configuration, the three-dimensional object producing apparatus of the present disclosure can appropriately control the energy absorbing capacities in the model region, taking into consideration temperature variation in the object forming layer (model region) during slow cooling of the particle layer, and the heated condition of the particle layer immediately below the particle layer to be heated. More specifically, the three-dimensional object producing apparatus of the present disclosure is configured to control at least any of the amount and the kind of the model material to be discharged in a manner that the temperature distribution in a model region to be formed will be approximately uniform, taking into consideration, for example, influence of transmission of heat from surrounding regions of the model region. This makes it possible to make the temperature distribution in the model region approximately uniform during at least any one of heating of the model region by the heating unit and slow cooling of the particle layer, and bring the model region into a condition suitable for object formation, making it possible to suppress deformation of a three-dimensional object and improve the object formation accuracy of the three-dimensional object.

### <Layer forming unit and layer forming step>

The layer forming unit is a unit configured to form a particle layer containing resin particles.

The layer forming step is a step of forming a particle layer containing resin particles.

The layer forming unit is not particularly limited and may be appropriately selected depending on the intended purpose. Examples of the layer forming unit include a combination of a mechanism configured to supply particles and a mechanism configured to form a particle layer while leveling off the supplied particles. The details of the layer forming unit will be described below.

### <<Resin particles>>

Resin particles refer to particles containing a resin component. In the following description, the resin particles may be referred to as "resin powder". As needed, the resin particles may contain other components than the resin component.

The resin component is not particularly limited and may be appropriately selected depending on the intended purpose. A thermoplastic resin is preferable.

### -Thermoplastic resin-

A thermoplastic resin refers to a resin that plasticizes and melts when heat is applied to the resin.

The thermoplastic resin is not particularly limited and may be appropriately selected depending on the intended purpose. Examples of the thermoplastic resin include crystalline resins, non-crystalline resins, and liquid crystal resins. A crystalline resin is preferable as the thermoplastic resin. Furthermore, a resin having a great difference between the melting start temperature and the recrystallizing temperature during cooling is preferable as the thermoplastic resin.

The crystalline resin refers to a resin having a detectable melting point peak in a measurement according to IS03146 (a plastic transition temperature measuring method, JIS K7121).

Examples of the thermoplastic resin include polyolefins, polyamides, polyesters, polyethers, polyphenylene sulfides, polyacetals (POM: Polyoxymethylene), polyimides, and fluororesins. One of these thermoplastic resins may be used alone or two or more of these thermoplastic resins may be used in combination.

Examples of polyolefins include polyethylene (PE) and polypropylene (PP).

Examples of polyamides include: polyamide 410 (PA410), polyamide 6 (PA6), polyamide 66 (PA66), polyamide 610 (PA610), polyamide 612 (PA612), polyamide 11 (PA11), and polyamide 12 (PA12); and semi-aromatic polyamides such as polyamide 4T (PA4T), polyamide MXD6 (PAMXD6), polyamide 6T (PA6T), polyamide 9T (PA9T), and polyamide 10T (PA10T).

Examples of polyesters include polyethylene terephthalate (PET), polybutadiene terephthalate (PBT), and polylactic acid (PLA). Among these polyesters, polyesters containing aromatic series that partially contain terephthalic acid or isophthalic acid are preferable in terms of imparting heat resistance.

Examples of polyethers include polyaryl ketone and polyether sulfone.

Examples of polyaryl ketone include polyether ether ketone (PEEK), polyether ketone (PEK), polyether ketone ketone (PEKK), polyaryl ether ketone (PAEK), polyether ether ketone ketone (PEEKK), and polyether ketone ether ketone ketone (PEKEKK).

The thermoplastic resin may be a thermoplastic resin having two melting point peaks such as PA9T. The thermoplastic resin having two melting point peaks completely melts when the temperature becomes higher than or equal to the higher melting point peak.

For example, polyphthalamide, polyphenylene sulfide, liquid crystal polymers, polysulfone, polyether sulfone, polyetherimide, polyamideimide, polyether ether ketone, and polytetrafluoroethylene are referred to as "super engineering plastics".

The shape of the resin particles is not particularly limited and may be appropriately selected depending on the intended purpose. Examples of the shape of the resin particles include shapes of circular cylindrical bodies, prismatic bodies, and spherical bodies. Among these shapes, circular cylindrical bodies are preferable.

The circular cylindrical bodies are not particularly limited and may be appropriately selected depending on the intended purpose. Examples of the circular cylindrical bodies include true-circular cylindrical bodies and elliptic cylindrical bodies. Among these circular cylindrical bodies, true-circular cylindrical bodies are preferable.

The circular cylindrical bodies encompass approximately circular cylindrical bodies. An approximately circular cylindrical body means a columnar body whose bottom surface has a ratio of 1 or greater but 10 or less as the ratio of the longer diameter to the shorter diameter (longer diameter/shorter diameter). The base circle of a circular cylindrical body may be partially chipped.

The prismatic bodies are not particularly limited and may be appropriately selected depending on the intended purpose like the circular cylindrical bodies. The base polygon of a prismatic body may be partially chipped.

The spherical bodies are not particularly limited and may be appropriately selected depending on the intended purpose like the circular cylindrical bodies. A spherical body may be partially chipped.

The diameter of the base circle of a circular cylindrical body is not particularly limited, may be appropriately selected depending on the intended purpose, and is preferably 5 micrometers or greater but 200 micrometers or less. When the base circle of a circular cylindrical body is an ellipse, the diameter refers to the longer diameter.

The length of one side of the base polygon of a prismatic body is not particularly limited and may be appropriately selected depending on the intended purpose. The diameter of the minimum circle (minimum bounding circle) that completely encloses the polygon is preferably 5 micrometers or greater but 200 micrometers or less.

The diameter of a spherical body is not particularly limited, may be appropriately selected depending on the intended purpose, and is preferably 5 micrometers or greater but 200 micrometers or less.

The height of a circular cylindrical body, i.e., the distance between the two opposite base circles (the distance between the top surface and the bottom surface) is not particularly limited, may be appropriately selected depending on the intended purpose, and is preferably 1 micrometer or greater but 200 micrometers or less.

The height of a prismatic body, i.e., the distance between the two opposite base polygons (the distance between the top surface and the bottom surface) is not particularly limited and may be appropriately selected depending on the intended purpose like the height of a circular cylindrical body, and is preferably 1 micrometer or greater but 200 micrometers or less.

The two opposite base circles (the top surface and the bottom surface) of a circular cylindrical body may have different areas. However, a ratio (r2/r1) of the diameter r2 of the base circle with the larger area to the diameter r1 of the base circle with the smaller area is preferably 1.5 or less and more preferably 1.1 or less because a smaller difference between the areas of the two base circles enables a higher bulk density.

The two opposite base polygons (the top surface and the bottom surface) of a prismatic body may have different areas. However, a ratio (S2/S1) of the area (S2) of the larger base polygon to the area (S1) of the smaller base polygon is preferably as close to 1 as possible because a smaller difference between the areas of the two base polygons enables a higher bulk density.

For example, when forming a three-dimensional object using an HSS-type three-dimensional object producing apparatus, it is possible to improve the accuracy of an object or a molding by increasing the bulk density of the resin particles.

It is preferable that columnar resin particles such as circular cylindrical bodies and prismatic bodies have no vertices in order to increase the bulk density. The vertices refer to the corners present in a columnar body.

### <<Particle layer>>

The particle layer refers to a layer containing the resin particles. In the following description, the particle layer may be referred to as "powder layer".

The average thickness of the particle layer is not particularly limited, may be appropriately selected depending on the intended purpose, and is preferably 10 micrometers or greater but 100 micrometers or less.

When the layer forming unit forms a particle layer, it is preferable to preheat the resin particles such that the temperature of the resin particles may become a desired preheating temperature. That is, it is preferable that the three-dimensional object producing method of the present disclosure further include a preheating step of preheating the resin particles such that the temperature of the resin particles may become a desired preheating temperature. With this step, the heating unit can heat the particle layer to a temperature at which the resin particles can fuse with each other even if energy to be applied to the particle layer by the heating unit is low.

The preheating temperature is not particularly limited, may be appropriately selected depending on the intended purpose, and is preferably a temperature between the recrystallizing temperature of the resin particles and the melting temperature of the resin particles. With the preheating temperature between the recrystallizing temperature of the resin particles and the melting temperature of the resin particles, it is possible to suppress deformation such as warpage of a three-dimensional object formed, while also maintaining the fluidity of the resin particles when forming a particle layer.

The preheating unit configured to perform the preheating step is not particularly limited and may be appropriately selected depending on the intended purpose. Examples of the preheating unit include known heaters, heating lamps, and heating rollers.

### <Discharging unit and discharging step>

The discharging unit is a unit configured to discharge a model material capable of absorbing energy to a particle layer to form a model region. In addition, the discharging unit is configured to discharge the model material in a manner that portions adjoining each other in the model region are varied in energy absorbing capacity.

The discharging step is a step of discharging a model material capable of absorbing energy to a particle layer to form a model region. In addition, in the discharging step, the model material is discharged in a manner that portions adjoining each other in the model region are varied in energy absorbing capacity.

The discharging unit is not particularly limited and may be appropriately selected depending on the intended purpose. Examples of the discharging unit include an inkjet-type discharging head.

The number of discharging units in the three-dimensional object producing apparatus is not particularly limited and may be appropriately selected depending on the intended purpose. Therefore, the same discharging unit may discharge different model materials, or a discharging unit configured to discharge one model material and a discharging unit configured to discharge another model material may be provided separately.

### <<Model region>>

A model region is a region formed by the discharging unit by discharging a model material capable of absorbing energy to the particle layer. A model region can be formed based on three-dimensional data representing a three-dimensional object to be produced (formed) as a three-dimensional model. For example, a model region may have a shape obtained by slicing the three-dimensional data at predetermined intervals.

In response to receiving energy applied by the heating unit and being heated, the model region formed becomes a model part, which constitutes a part of a three-dimensional object, through fusing of the resin particles in the model region with each other. In other words, because the model region formed can absorb energy efficiently owing to the model material discharged, the resin particles become a temperature higher than or equal to the melting point when energy is applied by the heating unit, and fuse with each other and solidify.

Fusing the resin particles with each other means heating the resin particles to a temperature higher than or equal to the melting point in order to make the resin particles solidify in a joined form when the temperature becomes lower than the melting point of the resin particles. Therefore, in the region in which the resin particles are fused with each other, at least part of the interface (grain boundary) between the resin particles has disappeared.

### <<<Model material>>>

The model material is not particularly limited and may be appropriately selected depending on the intended purpose so long as the model material is capable of absorbing energy. Examples of the model material include inks containing black pigments such as carbon black, inks containing pigments, and inks containing metal particles.

When the heating unit is a light irradiation unit, a model material that can generate heat by absorbing light emitted by the light irradiation unit is preferable among these model materials. For example, the aforementioned inks (black inks) containing black pigments such as carbon black are preferable. When the heating unit is a light irradiation unit, a model material that is a black ink can generate heat by efficiently absorbing light emitted by the light irradiation unit. This facilitates fusing of the resin particles in the model region with each other.

In the present disclosure, a plurality of kinds of model materials may be used as the model material. Specifically, for example, model materials having different energy absorbing capacities or model material having different surface tensions may be used. Alternatively, the model material having the same composition may be varied in the temperature.

Examples of the model materials having different energy absorbing capacities include model materials containing an energy absorbent at different concentrations, model materials containing different kinds of energy absorbents, and model materials containing a black pigment at different concentrations when the model materials are inks containing a black pigment.

When two kinds of model materials having different energy absorbing capacities are used, the difference between the energy absorbing capacities of the model materials is not particularly limited, and may be appropriately selected depending on the intended purpose. When the energy absorbing capacity of one model material is X, it is preferable that the energy absorbing capacity of the other model material be less than or equal to 0.8X.

This makes it possible to adjust the energy absorbing capacities in a model region to more preferable capacities matching the object forming conditions and better suppress deformation of a three-dimensional object.

Moreover, when the energy transmittance of one model material is Y (%), it is preferable that the energy transmittance of the other model material be greater than or equal to Y/0.8 (%).

When the discharging unit discharges model materials, it is also preferable to control the energy absorbing capacities in a model region by controlling the number of times and amounts by which the model material having the same energy absorbing capacity is discharged. More specifically, when making an energy absorbing capacity lower at some position in a model region, it is preferable to set a total amount of the model material to be discharged to that position lower than the amounts to be discharged to other positions, and discharge the model material to that position dividedly by a plurality of times.

Discharging the model material to the same position of a particle layer dividedly by a plurality of times will be described.

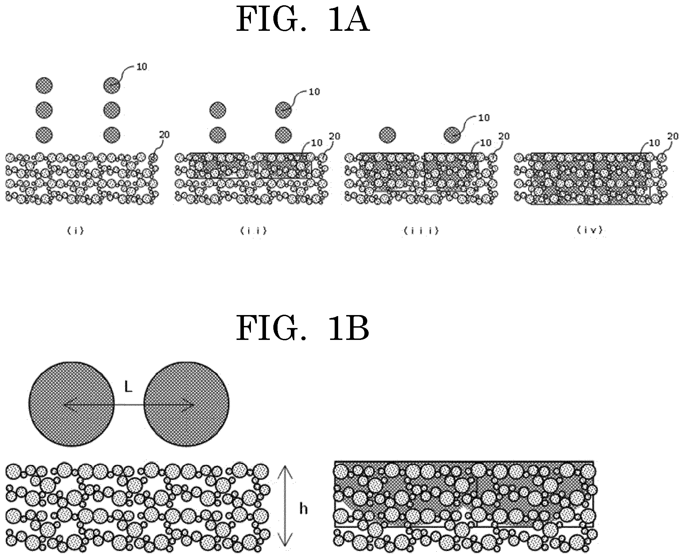

FIG. 1A is a cross-sectional view exemplarily illustrating an example behavior of the model material to permeate a k-th layer when liquid droplets of the model material are discharged (applied) to the k-th layer. FIG. 1A illustrates how a model material 10 dropped to a particle layer 31 permeates the particle layer 31.

As illustrated in FIG. 1A, the model material 10 is discharged to the resin particles 20 of the k-th layer at a predetermined resolution. As a result, the model material 10 permeates the k-th layer in the XY directions and the Z direction while aggregating the resin particles 20 by a liquid bridge force.

As illustrated in FIG. 1B, when the thickness of the particle layer 31 is "h", and the center-to-center distance between adjoining droplets of the model material 10 when landing on the particle layer 31 (i.e., the distance between adjoining dots) is "L", it is preferable to discharge the model material 10 in a manner that h<L is satisfied.

The model material 10 discharged permeates the k-th layer in the XY directions and in the Z direction. With h<L satisfied, the model material 10 permeates the k-th layer sufficiently in the Z direction, which is the layer lamination direction.

In order to secure an inter-layer strength of a three-dimensional object, liquid droplets need to solidly permeate the powder layers beyond the thickness h of each layer. In order to make the liquid droplets permeate a layer by the thickness h in the Z direction, it is preferable that adjoining liquid droplets not combine with each other before the liquid droplets permeate the layer in the Z direction, and that h<L be satisfied.

The upper limit of L cannot be determined flatly because the upper limit varies depending on, for example, the combination of the resin particles and the model material, but, for example, is preferably 8h or less, and more preferably 4h or less.

In this way, discharging the model material to the same position by an amount dividedly by a plurality of times makes it smoother for the model material to permeate a layer in the Z direction than when the model material of the same amount is discharged by one liquid droplet. This is considered due to that the model material permeates a layer in the Z direction before liquid droplets of the model material adjoining each other in the XY directions combine with each other to make the model material wet and spread in the XY directions. That is, discharging the model material to the same position dividedly by a plurality of times makes it possible to suppress the model material from wetting and spreading in the XY directions and better improve the object formation accuracy of a three-dimensional object.

### <Heating unit and heating step>

The heating unit is a unit configured to heat a particle layer in which a model region is formed through application of energy, to fuse the resin particles in the model region with each other.

The heating step is a step of heating a particle layer in which a model region is formed through application of energy, to fuse the resin particles in the model region with each other.

The heating unit is not particularly limited and may be appropriately selected depending on the intended purpose, so long as the heating unit can heat a particle layer by applying energy. Examples of the heating unit include a light irradiation unit configured to emit light, a microwave irradiation unit configured to emit microwaves, and an electron beam irradiation unit configured to emit electron beams.

The heating unit is configured to apply energy to a model region of a particle layer and heat the model region, to fuse the resin particles in the model region with each other and form a model part constituting a part of a three-dimensional object.

Among the heating units mentioned above, a light irradiation unit is preferable as the heating unit. When the heating unit is a light irradiation unit and the model material can generate heat by absorbing light, it is possible to form a three-dimensional object efficiently in a short time, making it possible to improve the productivity of the three-dimensional object producing apparatus.

The light irradiation unit is not particularly limited and may be appropriately selected depending on the intended purpose. Examples of the light irradiation unit include a halogen lamp, a laser irradiation unit, a LED irradiation unit, and a xenon lamp.

Specific examples of commercially available products of halogen lamps that can be used as the light irradiation unit include a line type halogen light source 3W/mm available from Ushio Inc. (with a color temperature of 3,000 K and an energy density of 0.04 W/mm²).

The number of heating units provided in the three-dimensional object producing apparatus is not particularly limited and may be appropriately selected depending on the intended purpose.

### <Other units>

The other units are not particularly limited and may be appropriately selected depending on the intended purpose. Examples of the other units include a maintenance unit configured to suppress occurrence of discharging failures in the discharging unit, and a controlling section configured to control the three-dimensional object producing apparatus.

The three-dimensional object producing apparatus of the present disclosure can produce (form) a three-dimensional object by repeatedly operating at least the layer forming unit, the discharging unit, and the heating unit. Likewise, the three-dimensional object producing method of the present disclosure can produce (form) a three-dimensional object by repeatedly performing at least the layer forming step, the discharging step, and the heating step.

The embodiments of the present disclosure will be described below. The present disclosure should not be construed as being limited to these embodiments.

For example, the number, position, and shape of the constituent members are not limited to as specified in the embodiments, but may be any number, position, and shape that are suitable for working the present disclosure.

### <First embodiment>

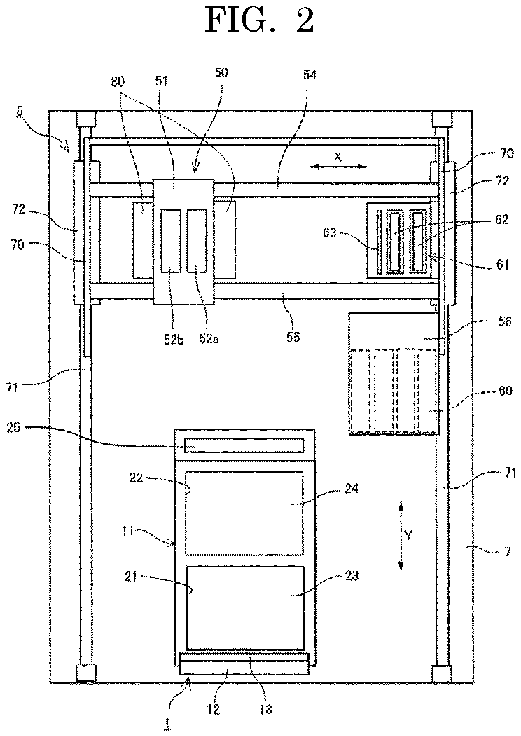

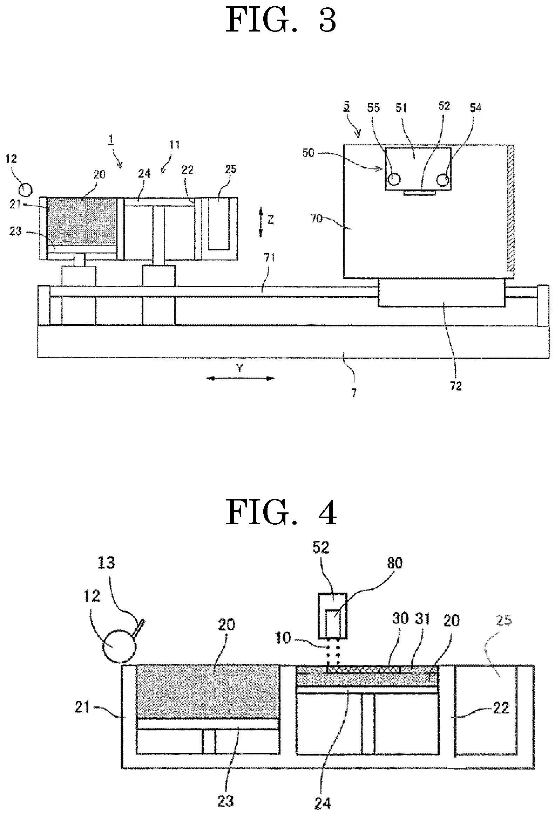

FIG. 2 is a schematic plan view of the three-dimensional object producing apparatus of the present disclosure according to one embodiment. FIG. 3 is a schematic side view of the three-dimensional object producing apparatus of the present disclosure according to one embodiment. FIG. 4 is a schematic side view of an object forming section of the three-dimensional object producing apparatus of the present disclosure according to one embodiment.

An embodiment of the three-dimensional object producing apparatus of the present disclosure illustrated in FIG. 2 to FIG. 4 includes an object forming section 1 in which an object forming layer (model part) 30, which is a layered object formed through fusing of the resin particles, is formed, a discharging unit 5 serving as the discharging unit configured to discharge the model material to a particle layer 31 densely laid in a layer form in the object forming section 1, and a light irradiation unit 80 serving as the heating unit configured to irradiate the particle layer 31 with light 81.

The object forming section 1 includes, for example, a particle tank 11, and a flattening roller 12 as a rotating body, which is an example of the layer forming unit (a flattening member or a recoater). The flattening member may be, for example, a plate-shaped member (blade) instead of a rotating body.

The particle tank 11 includes a supplying tank 21 configured to supply resin particles 20, and an object forming tank 22 in which object forming layers 30 are laminated to form a three-dimensional object. Before object formation, the resin particles 20 are supplied into the supplying tank 21. The bottom of the supplying tank 21 is liftable upward and downward in the vertical direction (height direction) as a supplying stage 23. Likewise, the bottom of the object forming tank 22 is liftable upward and downward in the vertical direction (height direction) as an object forming stage 24. A three-dimensional object, which is laminated object forming layers 30, is formed over the object forming stage 24.

The supplying stage 23 and the object forming stage 24 are lifted upward and downward in the direction of the arrow Z (height direction) by means of a motor.

The flattening roller 12 is configured to supply particles 20, which have been supplied onto the supplying stage 23 of the supplying tank 21, to the object forming tank 22, and level off and flatten the particles 20 as a flattening member, to form a particle layer 31.

The flattening roller 12 is disposed reciprocably relative to the stage surface of the object forming stage 24 (stage surface: a surface over which the resin particles 20 are placed) in the direction of the arrow Y along the stage surface, and is moved by means of a reciprocating mechanism. The flattening roller 12 is driven to rotate by means of a motor 26.

The discharging unit 5 includes a liquid discharging unit 50 configured to discharge an object forming liquid (model material) 10 to the particle layer 31 over the object forming stage 24.

The liquid discharging unit 50 includes a carriage 51, and two (may be one or three or more) liquid discharging heads (hereinafter, referred to simply as "heads") 52a and 52b mounted on the carriage 51.

The carriage 51 is movably held on guide members 54 and 55. The guide members 54 and 55 are liftably held on side panels 70 and 70 on both sides.

The carriage 51 is reciprocated in the main scanning direction, which is the direction of the arrow X (hereinafter, referred to simply as "X direction", the same applies to Y and Z), by means of an X direction scanning motor 550 described below, via a main scanning movement mechanism formed of a pulley and a belt.

The two heads 52a and 52b (hereinafter, referred to as "heads 52" when the two heads are not distinguished from each other) each have a plurality of nozzle lines in each of which a plurality of nozzles through which a liquid is discharged are arranged. The nozzle lines of the heads 52 are configured to discharge the object forming liquid 10. For example, the head 52a may be configured to discharge a first model material, and the head 52b may be configured to discharge a second model material. The heads 52 may be configured to discharge object forming liquids colored in, for example, cyan, magenta, yellow, and black. The heads 52 are not limited to this embodiment.

A plurality of tanks 60 containing these object forming liquids respectively are mounted on a tank loading section 56, and the object forming liquids 10 are supplied into the heads 52a and 52b through, for example, supplying tubes.

A maintenance mechanism 61 configured to maintain and repair the heads 52 of the liquid discharging unit 50 is disposed at one side in the X direction.

The maintenance mechanism 61 includes caps 62 and a wiper 63. The maintenance mechanism 61 is configured to bring the caps 62 into close contact with the nozzle surfaces (surfaces in which the nozzles are formed) of the heads 52 and suck the object forming liquids 10 through the nozzles to get rid of particles clogging the nozzles or the object forming liquids having thickened. The maintenance mechanism 61 is also configured to wipe the nozzle surfaces with the wiper 63 to form a meniscus in the nozzles (the nozzles are at negative pressure internally). While the object forming liquids 10 are not being discharged, the maintenance mechanism 61 covers the nozzle surfaces of the heads with the caps 62 to prevent mixing of the resin particles 20 into the nozzles or drying of the object forming liquids 10.

The discharging unit 5 includes slider units 72 movably held on guide members 71 disposed over a base member 7, and the entire discharging unit 5 can reciprocate in the Y direction (sub-scanning direction) orthogonal to the X direction. The entire discharging unit 5 is reciprocated in the Y direction by means of a scanning mechanism including a motor 552 described below.

The liquid discharging unit 50 is disposed liftable upward and downward in the direction of the arrow Z together with the guide members 54 and 55. The liquid discharging unit 50 is lifted upward and downward in the Z direction by means of a lifting mechanism including a motor 551 described below.

A light irradiation unit 80 is configured to scan the regions to which the object forming liquids 10 are discharged from the heads 52 while emitting light 81 to the regions. Being provided in the carriage 51, the light irradiation unit 80 can be driven together with the heads 52, but the light irradiation unit 80 may also be driven alone in the X direction if a separate drive source is provided.

The light irradiation unit 80 may be provided on both of the right-hand and lefthand sides of the heads 52 or may be provided on either side.

The object forming section 1 will be described in detail below.

The particle tank 11 includes the supplying tank 21, the object forming tank 22, and an excessive particle receiving tank 25, which are tanks having a box-like shape with an opened top. The supplying stage 23 and the object forming stage 24 are disposed liftably upward and downward in the supplying tank 21 and the object forming tank 22 respectively.

The side surface of the supplying stage 23 is disposed in contact with the internal surface of the supplying tank 21. The side surface of the object forming stage 24 is disposed in contact with the internal surface of the object forming tank 22. The upper surfaces of the supplying stage 23 and object forming stage 24 are kept level.

The flattening roller 12 transfers and supplies the resin particles 20 from the supplying tank 21 to the object forming tank 22, and levels off and flattens the surface to form a particle layer 31, which is particles in a layer state having a predetermined thickness.

The flattening roller 12 is a rod-like member longer than the internal dimension of the object forming tank 22 and the supplying tank 21 (internal dimension: width of a portion supplied or filled with the resin particles 20), and is reciprocated in the Y direction (sub-scanning direction) along the stage surfaces by means of a reciprocating mechanism.

The flattening roller 12 is configured to horizontally move from outside the supplying tank 21 in a manner to pass above the supplying tank 21 and the object forming tank 22 while being rotated by means of the motor 26. In this way, the resin particles 20 are transferred and supplied to the object forming tank 22, and the flattening roller 12 flattens the particles 20 while passing above the object forming tank 22, to form a particle layer 31.

As illustrated in FIG. 4, there is provided a particle removing plate 13, which is a particle removing member configured to come into contact with the circumferential surface of the flattening roller 12 to remove the resin particles 20 adhering to the flattening roller 12.

The particle removing plate 13 is configured to move together with the flattening roller 12 in a state of having contact with the circumferential surface of the flattening roller 12. The particle removing plate 13 may be disposed in a counter direction or may be disposed in a forward direction when the flattening roller 12 rotates in the rotating direction to perform flattening.

In the present embodiment, the particle tank 11 of the object forming section 1 includes three tanks, namely the supplying tank 21, the object forming tank 22, and the excessive particle receiving tank 25. However, instead of providing the supplying tank 21, it may be possible to supply particles to the object forming tank 22 from a particle supplying device and flatten the particles by means of a flattening unit.

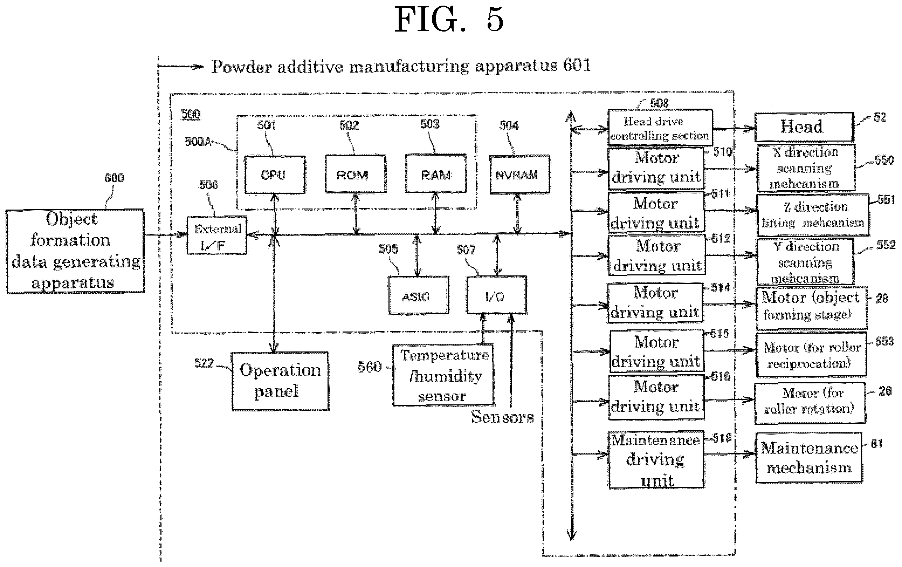

Next, the controlling section of the three-dimensional object producing apparatus 601 will be generally described with reference to FIG. 5.

The controlling section 500 serving as a controlling unit includes a main controlling section 500A including: a CPU 501 configured to control the entire three-dimensional object producing apparatus; a ROM 502 configured to store programs including a program causing the CPU 501 to perform control on a three-dimensional object forming operation including control relating to the present disclosure, and other fixed data; and a RAM 503 configured to temporarily store, for example, object formation data.

The controlling section 500 includes a nonvolatile memory (NVRAM) 504 configured to retain data even while the power supply to the apparatus is cut off. The controlling section 500 includes an ASIC 505 configured to perform image processing for performing various signal processing on image data, and process input/output signals for controlling the entire apparatus.

The controlling section 500 includes an I/F 506 configured to send and receive data and signals and used for receiving object formation data from an external object formation data generating apparatus 600. The object formation data generating apparatus 600 is an apparatus configured to generate object formation data, which is slice data representing a final object sliced per object forming layer. The object formation data generating apparatus 600 can be realized by an information processing apparatus such as a personal computer.

The controlling section 500 includes an I/O 507 configured to receive sensing signals from various sensors.

The controlling section 500 includes a head drive controlling section 508 configured to control driving of the heads 52 of the liquid discharging unit 50.

The controlling section 500 also includes a motor driving unit 510 configured to drive a motor constituting an X direction scanning mechanism 550 configured to move the carriage 51 of the liquid discharging unit 50 in the X direction (main scanning direction), and a motor driving unit 512 configured to drive a motor constituting a Y direction scanning mechanism 552 configured to move the liquid discharging unit 5 in the Y direction (sub-scanning direction).

The controlling section 500 includes a motor driving unit 511 configured to drive a motor constituting a Z direction lifting mechanism 551 configured to move (lift) the carriage 51 of the liquid discharging unit 50 upward and downward in the Z direction. In lifting upward and downward in the direction of the arrow Z, the entire discharging unit 5 may be lifted upward and downward.

The controlling section 500 includes a motor driving unit 513 configured to drive a motor 27 configured to lift the supplying stage 23 upward and downward, and a motor driving unit 514 configured to drive a motor 28 configured to lift the object forming stage 24 upward and downward.

The controlling section 500 includes a motor driving unit 515 configured to drive a motor 553 for a reciprocating mechanism configured to move the flattening roller 12, and a motor driving unit 516 configured to drive the motor 26 configured to drive rotation of the flattening roller 12.

The controlling section 500 includes a supplying system driving unit 517 configured to drive a particle supplying device 101 configured to supply the particles (resin particles) 20 to the supplying tank 21, and a maintenance driving unit 518 configured to drive the maintenance mechanism 61 for the liquid discharging unit 50.

Sensing signals of, for example, a temperature/humidity sensor 560 configured to detect the temperature and humidity as the environmental conditions of the apparatus and sensing signals of other sensors are input to the I/O 507 of the controlling section 500.

An operation panel 522 for inputting and displaying needed information of the apparatus is coupled to the controlling section 500.

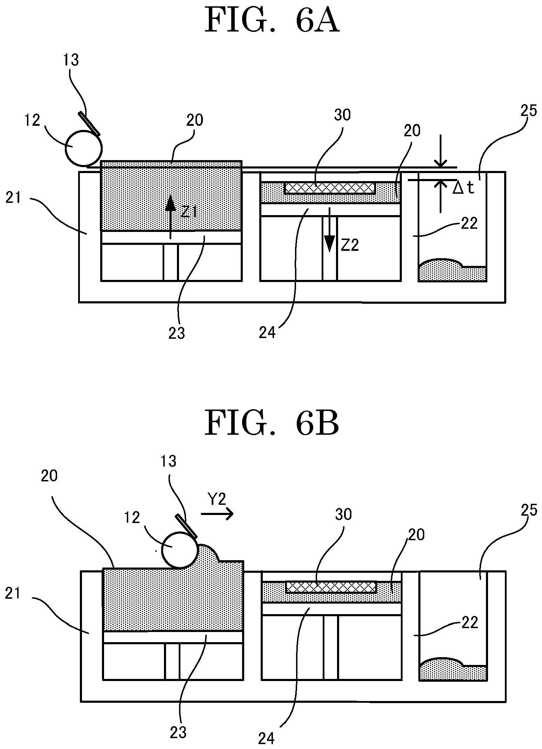

Next, the flow of production (formation) of a three-dimensional object will be described with reference to FIG. 6A to FIG. 6F. FIG. 6A to FIG. 6F are exemplary diagrams illustrating an example flow of formation of a three-dimensional object.

The description will start from a state that a first object forming layer 30 has been formed over the object forming stage 24 of the object forming tank 22.

When forming the next object forming layer 30 over the object forming layer 30, the supplying stage 23 of the supplying tank 21 is lifted upward in the Z1 direction and the object forming stage 24 of the object forming tank 22 is lifted downward in the Z2 direction as illustrated in FIG. 6A.

The distance by which the object forming stage 24 is lifted downward is set such that the interval between the upper surface of the object forming tank 22 (the surface of the particle layer) and the lower side (the lower tangential portion) of the flattening roller 12 is Δt. The interval Δt corresponds to the thickness of a particle layer 31 to be formed next. The interval Δt is preferably about from some tens of micrometers through 100 micrometers.

Next, as illustrated in FIG. 6B, the flattening roller 12 is moved in the Y2 direction (toward the object forming tank 22) while being rotated in the forward direction (the direction of the arrow), to transfer and supply the particles (resin particles) 20 located above the upper surface level of the supplying tank 21 to the object forming tank 22 (supplying of particles).

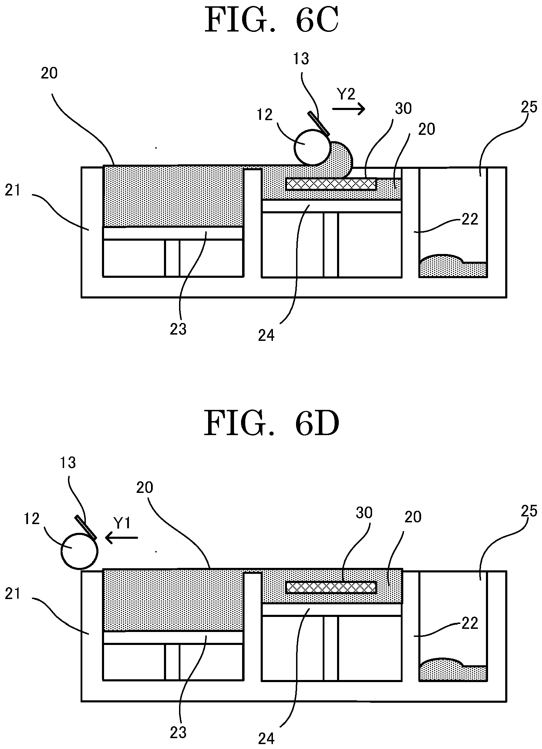

Then, the flattening roller 12 is moved in parallel with the stage surface of the object forming stage 24 of the object forming tank 22 as illustrated in FIG. 6C, to form a particle layer 31 having a predetermined thickness Δt over the object forming layer 30 over the object forming stage 24 as illustrated in FIG. 6D (flattening). After the particle layer 31 is formed, the flattening roller 12 is moved in the Y1 direction to be returned to the initial position as illustrated in FIG. 6D.

The flattening roller 12 is configured to be able to move with a constant distance kept from the upper surface level of the object forming tank 22 and the supplying tank 21. With the ability to move keeping a constant distance, the flattening roller 12 can form a particle layer 31 having a uniform thickness Δt over the object forming tank 22 or over the object forming layer 30 already formed, while conveying the particles 20 to the top of the object forming tank 22.

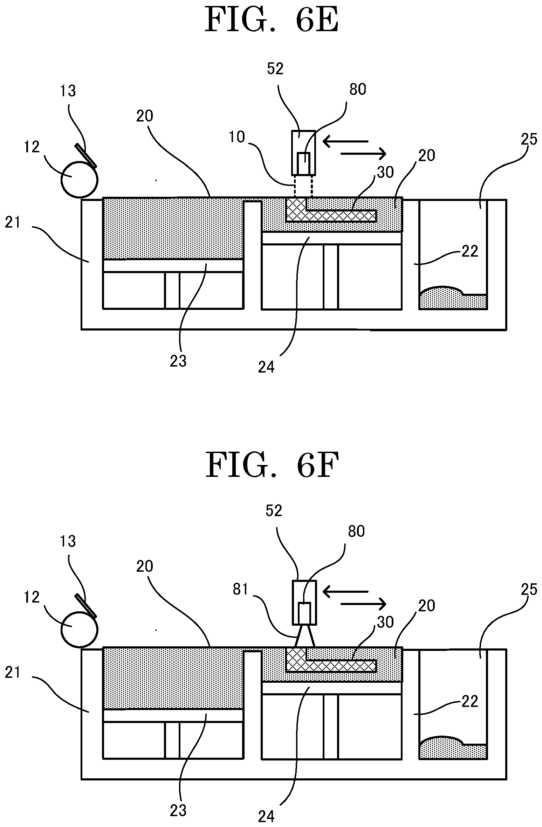

Subsequently, as illustrated in FIG. 6E, liquid droplets of the object forming liquids 10 are discharged from the heads 52 of the liquid discharging unit 50 to desired positions in the object forming tank 22, to form a model region. Then, as illustrated in FIG. 6F, the light irradiation unit 80 scans over the object forming tank 22 while emitting light 81, to heat the particle layer 31 and fuse the resin particles with each other, to form a model part (object forming layer) 30.

Next, the step of forming a particle layer 31 through supplying of the resin particles and flattening, the step of discharging the object forming liquids from the heads 52, and the heating step by the light irradiation unit 80 described above are repeated, to form a new object forming layer 30. Here, the new object forming layer 30 and the underlying object forming layer 30 are integrated and constitute a part of a three-dimensional object.

Afterwards, the step of forming a particle layer 31 through supplying of the resin particles and flattening, the step of discharging the object forming liquids from the heads 52, and the heating by the light irradiation unit 80 are repeated a needed number of times, to produce a three-dimensional object (stereoscopic object).

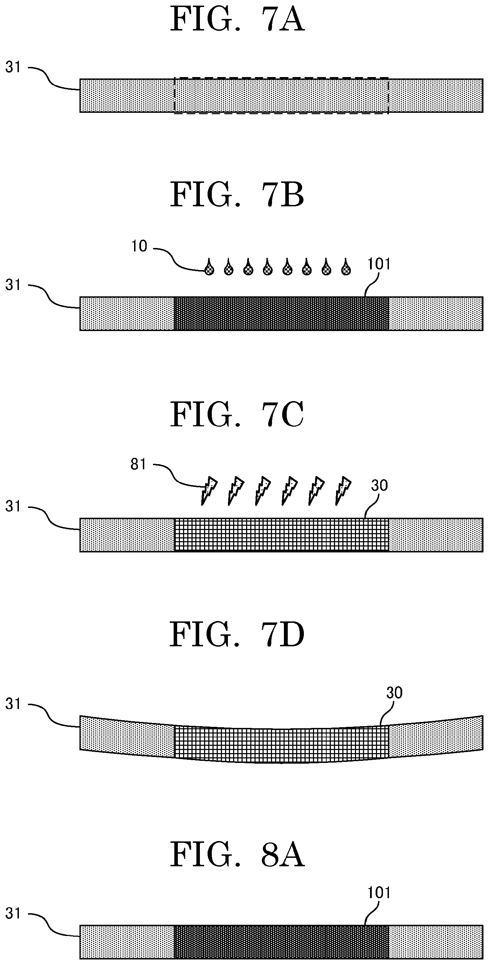

The problems of the existing technique will now be described in order to describe the effects of the present embodiment. FIG. 7A to FIG. 7D are exemplary views illustrating an example flow of forming a model part according to an existing technique.

A model material 10 is discharged as illustrated in FIG. 7B to a region of a particle layer 31 enclosed within a broken line illustrated in FIG. 7A, to form a model region 101. Next, resin particles 20 in the model region 101 are irradiated with light 81 as illustrated in FIG. 7C to be melted and fused with each other, to form a model part 30.

Afterwards, when the model part 30 is subjected to slow cooling and solidified, a temperature difference may occur between the upper side and the lower side of the model part 30. In this example, the upper side of the model part 30 has the lower temperature and the lower side of the model part 30 has the higher temperature. This is considered due to that the upper side of the model part 30 is exposed to the outside air and easily cooled, while the lower side of the model part 30 contacts another particle layer positioned immediately below and is kept warm and not easily cooled. Hence, during cooling and solidification after heating and melting, a volumetric shrinkage difference occurs between the upper side and the lower side of the model part (region) 30. As a result, a model part 30, which is a solidified product, deforms and warps in the upward or downward direction. In the example of FIG. 7D, correspondingly to the temperature difference in the model part 30, the model part 30 warps to protrude in the downward direction.

Such warpage of the model part 30 may occur per particle layer 31. Therefore, the warpage may be taken over by a three-dimensional object produced by repeating laminating particle layers 31 in which model parts 30 are formed, to degrade the object formation accuracy.

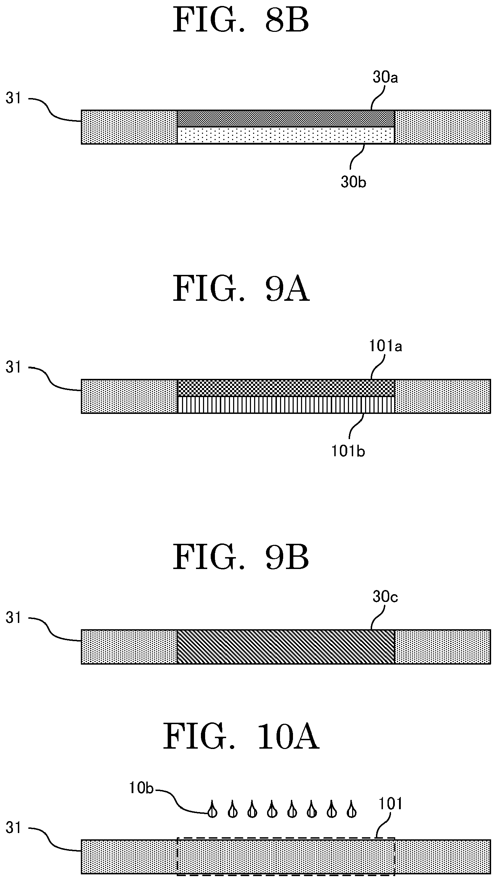

FIG. 8A is a view illustrating an example concentration distribution of an energy absorbent of a model material according to an existing technique. FIG. 8B is a view illustrating an example temperature distribution when a particle layer is cooled after heated in the case of the concentration distribution illustrated in FIG. 8A.

As illustrated in FIG. 8A, according to the existing technique, an energy absorbent of the model material is distributed uniformly in the model region 101 in terms of concentration. Therefore, when a particle layer 31 is cooled after heated, the upper side 30a of the model part 30 becomes a lower temperature and the lower side 30b of the model part 30 becomes a higher temperature. This is a condition that is likely to cause warpage.

FIG. 9A is a view illustrating an example concentration distribution of an energy absorbent of a model material according to the first embodiment. FIG. 9B is a view illustrating an example temperature distribution when a particle layer is cooled after heated in the case of the concentration distribution illustrated in FIG. 9A.

As illustrated in FIG. 9A, in the first embodiment, an energy absorbent of the model material in the model region 101 is distributed differently in terms of concentration between the upper side 101a of the model region 101 and the lower side 101b of the model region 101. More specifically, the concentration of the energy absorbent in the upper side 101a of the model region 101 is higher, and the concentration of the energy absorbent in the lower side 101b of the model region 101 is lower. With this concentration distribution, temperature variation in the model part 30 is suppressed as illustrated in FIG. 9B when the particle layer 31 is cooled after heated, to produce a model part 30c having an approximately uniform temperature distribution and having less or no volumetric shrinkage difference. In this way, warpage of the model part 30 can be suppressed. By discharging a model material 10 and forming a model region 101 in a manner that the model part 30 will have no volumetric shrinkage difference particularly during cooling, it is possible to better suppress warpage of the model part 30.

In other words, in the first embodiment, before the heating unit applies energy, the discharging unit discharges a first model material to a first particle layer formed by the layer forming unit, to form a first model region. Further, in the first embodiment, the discharging unit discharges a second model material having a higher energy absorbing capacity than the energy absorbing capacity of the first model material to a second particle layer positioned approximately immediately above the first model region, to form a second model region. This suppresses temperature variation between the model regions (parts) when the particle layers are cooled after heated, to make the volumetric shrinkage difference between the first model region and the second model region small, making it possible to suppress warpage of the model parts. "Approximately immediately above" means a positional relationship in which regions of the particle layers at least partially contact each other in the layer lamination direction.

Here, the first model material and the second model material may have the same composition or different compositions (kinds). Different compositions are preferable. More specifically, it is preferable to use a first model material and a second model material having different energy absorbing capacities and surface tensions. In this case, it is preferable that the second model material have an energy absorbing capacity and a surface tension higher than the first model material. This makes it possible to make the energy absorbent concentration higher in the upper side (i.e., the second model region) of the model region. By making the energy absorbing capacity higher in the upper side from which heat is easily dissipated, it is possible to suppress temperature variation between the model regions (parts) during cooling. Moreover, the second model material having a higher surface tension does not easily permeate the model region fully to the lower surface of the model region, and can hence be positioned in the upper side of the model region. In this case, because the first model material having a lower surface tension than the second model material can easily permeate the model region, the first model material can easily reach the lower side (i.e., first model region) of the model region.

A specific flow of forming a model region of this case will be described.

FIG. 10A to FIG. 10D are views illustrating an example flow of forming a desired concentration distribution of an energy absorbent in a model region of one particle layer according to the first embodiment.

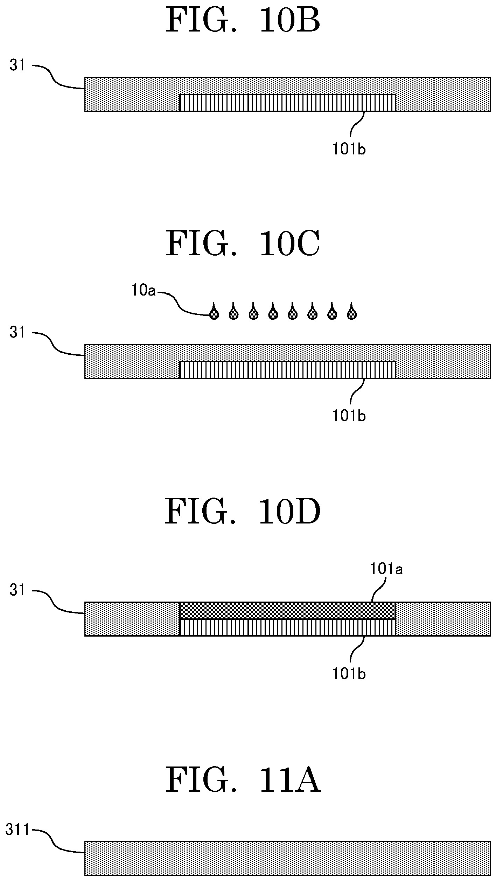

First, as illustrated in FIG. 10A, a first model material 10b is discharged to a region of the particle layer 31 to become a model region 101. As a result, the first model material 10b having a low surface tension and hence a high permeability reaches the lower side of the portion to become the model region 101, to form a first model region 101b having a low energy absorbing capacity as illustrated in FIG. 10B.

Next, as illustrated in FIG. 10C, a second model material 10a is discharged to the region of the particle layer 31 to become the model region 101. As a result, the second model material 10a having a high surface tension and a low permeability stays within the upper side of the portion to become the model region 101, to form a second model region 101a having a high energy absorbing capacity as illustrated in FIG. 10D.

The model region 101 formed in this way has a high energy absorbent concentration in the upper side 101a of the model region 101 and a lower energy absorbent concentration in the lower side 101b of the model region 101. Therefore, when the particle layer is cooled after heated, temperature variation in the model region (part) is suppressed, to make the volumetric shrinkage difference between the upper side 101a and the lower side 101b small, making it possible to suppress warpage of the model part.

In the example described above, permeability to the particle layer is controlled by using the second model material having a higher surface tension than the first model material. For example, permeability may be controlled by setting the temperature of the second model material lower than the temperature of the first model material.

In the first embodiment, the layer forming unit may form a first particle layer and a second particle layer simultaneously, or may form a second particle layer after forming a first particle layer. That is, a first particle layer and a second particle layer may be formed as one particle layer, or may be formed as different particle layers. Above all, in the first embodiment, it is preferable that the layer forming unit form a second particle layer after forming a first particle layer. In this case, in the first embodiment, it is preferable that the layer forming unit form a second particle layer after the layer forming unit forms a first particle layer and the discharging unit forms a first model region.

The aforementioned embodiment of the layer forming unit forming a second particle layer after the layer forming unit forms a first particle layer and the discharging unit forms a first model region will be described.

FIG. 11A to FIG. 11E are views illustrating an example flow when the layer forming unit forms a second particle layer after the layer forming unit forms a first particle layer and the discharging unit forms a first model region according to the first embodiment.

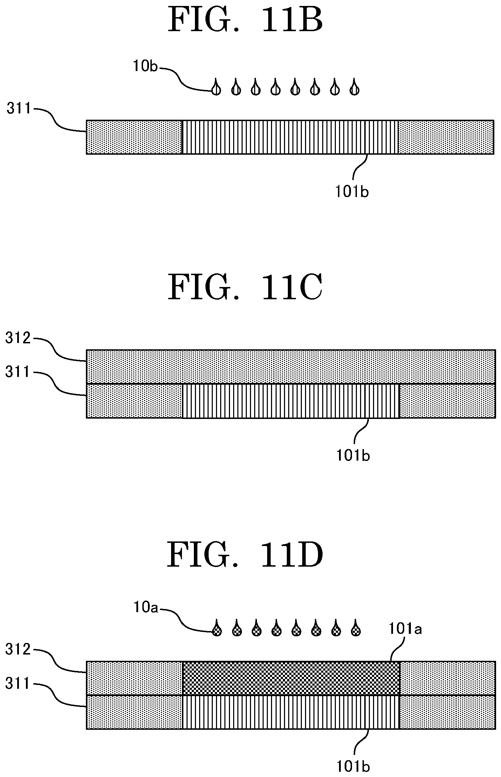

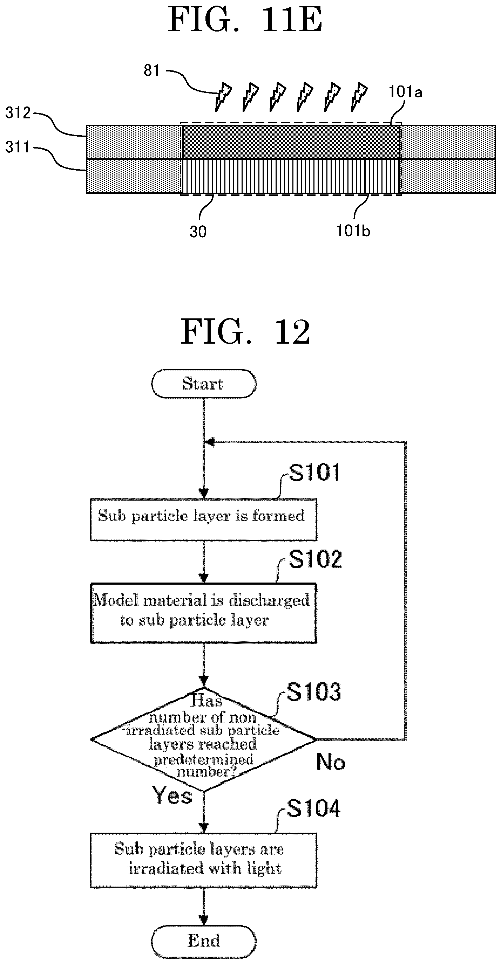

First, a first particle layer 311 (sub particle layer 311) is formed as illustrated in FIG. 11A, and a first model material 10b is discharged to form a first model region 101b as illustrated in FIG. 11B. Next, a second particle layer 312 (sub particle layer 312) is formed over the first particle layer 311 as illustrated in FIG. 11C, and a second model material 10a is discharged to form a second model region 101a as illustrated in FIG. 11D. Subsequently, a light irradiation unit 80 irradiates the first particle layer 311 and the second particle layer 312 with light 81 as illustrated in FIG. 11E, to fuse the resin particles in the first model region 101b and the second model region 101a, to form a model part 30. Here, the region in FIG. 1E enclosed within a broken line is a model part 30 formed in one light irradiation.

In this way, by the layer forming unit forming a second particle layer after the layer forming unit forms a first particle layer and the discharging unit forms a first model region, it is possible to more accurately control the first model region and the second model region, making it possible to better suppress warpage of a three-dimensional object. This also advantageously provides a greater latitude in selection of the model material.

FIG. 12 is a flowchart illustrating an example flow of forming a model part corresponding to one layer when a layer forming unit forms a second particle layer after the layer forming unit forms a first particle layer and the discharging unit forms a first model region according to the first embodiment. Here, the flow will be described according to the steps denoted by S in the flowchart illustrated in FIG. 12. The process flow described below can be executed by a computer including the controlling section 500 of the three-dimensional object producing apparatus 601 of the present disclosure.

In the step S101, the controlling section 500 causes the flattening roller 12, which is an example of the layer forming unit, to form a sub particle layer 311, and moves the flow to the step S102.

In the step S102, the controlling section 500 causes the head 52, which is an example of the discharging unit, to discharge a model material 10 intended to be discharged to the sub particle layer 311 formed in the step S101, to form a model region 101, and moves the flow to the step S103.

In the step S103, the controlling section 500 moves the flow to the step S104 when it is determined that the number of sub particle layers that have not been irradiated with light 81 by the light irradiation unit 80, which is an example of the heating unit, has reached a predetermined number. The controlling section 500 returns the flow to the step S101 when it is determined that the number of sub particle layers that have not been irradiated with light 81 by the light irradiation unit 80 has not reached the predetermined number. Until here, the number of sub particle layers has been described as two as an example. However, the number of sub particle layers is not limited to two, but may be appropriately selected.

In the step S104, the controlling section 500 causes the light irradiation unit 80 to irradiate the particle layer 31 with light 81 to heat the particle layer 31 and fuse the resin particles 20 in the model region 101 of the particle layer 31 with each other, to form a model part 30 corresponding to one layer, and terminates the flow.

By repeating forming a model part 30 corresponding to one layer according to the flow illustrated in FIG. 12 a predetermined number of times, it is possible to form a three-dimensional object while suppressing warpage.

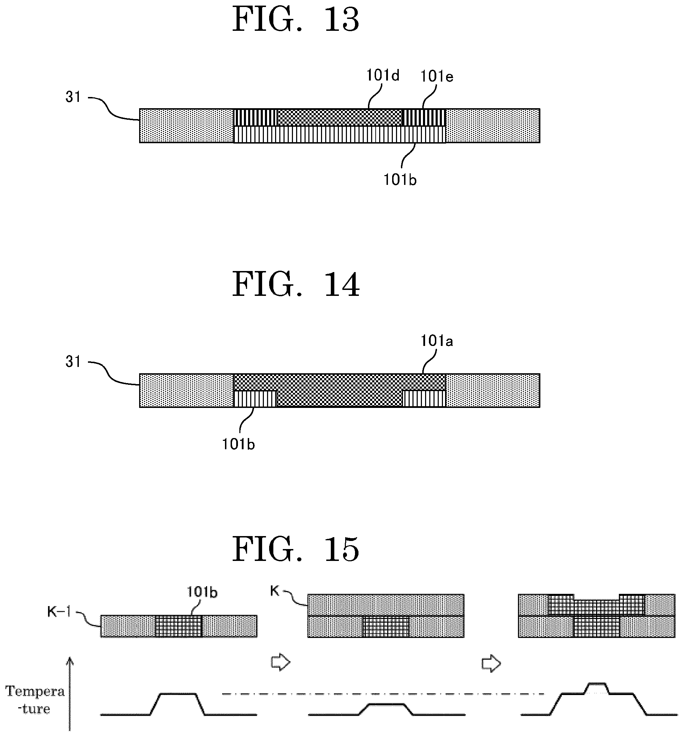

The energy absorbing capacity may be varied in the first model region or in the second model region. For example, as illustrated in FIG. 13, the second model region 101a may have a second model region 101d and a second model region 101e. This makes it possible to perform a more accurate control for suppressing temperature difference, and further improve the object formation accuracy.

Further, warpage of a model part may be outstanding at end portions of the model part. Therefore, first model regions 101b may be the regions to form the lower end portions of a model region 101 as illustrated in FIG. 14.

Here, in the first embodiment, when the energy absorbing capacity of the second model material is X, it is preferable that the energy absorbing capacity of the first model material be less than or equal to 0.8X. Specifically, when the energy transmittance of the second model material is Y (%), it is preferable that the energy transmittance of the first model material be greater than or equal to Y/0.8 (%). This makes it possible to adjust the energy absorbing capacities in the model region to more preferable capacities matching the object forming conditions and better suppress deformation of a three-dimensional object.

### <Second embodiment>

In the second embodiment, the configuration of the apparatus is the same as in the first embodiment. Therefore, description of the configuration is skipped.

The problems of the existing technique in terms of the second embodiment will now be described in order to describe the effects of the present embodiment.

FIG. 15 is a view illustrating an example of how a dent (sink) occurs when a second particle layer is formed over a first particle layer according to the existing technique. FIG. 15 describes the first particle layer as a (K-1) layer and the second particle layer as a K layer.

The existing technique has the following problem. First, when energy is applied to the (K-1) layer as illustrated in the left portion of FIG. 15, the temperature of the model region to which the model material has been discharged rises. Therefore, the temperature of the model region of the (K-1) layer is high also while the layer forming unit forms the K layer as illustrated in the center portion of FIG. 15. Hence, when the model region of the K layer is defined to include at least a part of the model region of the (K-1) layer and regions other than the model region of the (K-1) layer as illustrated in the right portion of FIG. 15, the model region of the K layer has variation in the temperature distribution. Therefore, the melted state of the resin particles after energy is applied varies from place to place in the model region of the K layer. Particularly, because the region positioned approximately immediately above the model region of the (K-1) layer has a high temperature in the first place, the resin particles undergo a greater melting to cause the region to be dented greatly in the Z direction, making it impossible for the model region of the K layer to have a uniform plane. Hence, a dent (sink) occurs and degrades the accuracy of a three-dimensional object.

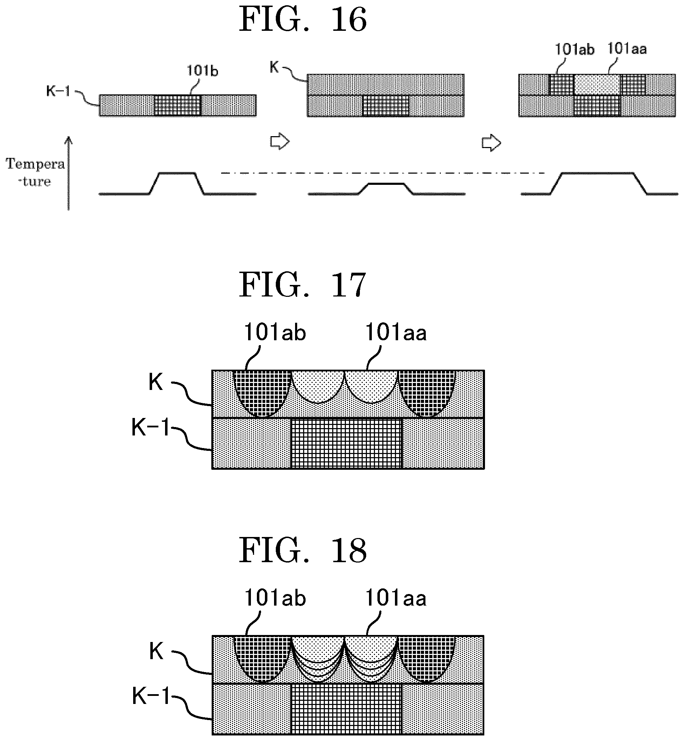

Here, FIG. 16 is a view illustrating an example distribution of the model material when forming a second particle layer over a first particle layer according to the second embodiment.

In the second embodiment, a model region 101aa of the K layer positioned approximately immediately above a model region 101b of the (K-1) layer is formed by discharging the second model material such that the energy absorbing capacity is lower than the first model material discharged to form the model region 101b of the (K-1) layer as illustrated in the right portion of FIG. 16. In the example of FIG. 16, when the amount of the model material discharged to the model region 101b of the (K-1) layer is assumed to be 100%, the model material is discharged to the region 101aa of the model region 101a of the K layer positioned approximately immediately above the model region 101b of the (K-1) layer in a manner that the amount of the model material is 80%. Further, the model material is discharged to the regions 101ab of the model region 101a of the K layer not overlapping (i.e., not approximately immediately above) the model region 101b of the (K-1) layer by the same amount (100%) as in the model region 101b of the (K-1) layer.

In other words, in the second embodiment, when the layer forming unit forms a second particle layer over a first particle layer, the discharging unit forms the second model region to be positioned approximately immediately above the first model part, which is formed of the resin particles fused with each other in the first model region of the first particle layer, by discharging the second model material such that the energy absorbing capacity is lower than the first model material discharged to form the first model region of the first particle layer.

In the second embodiment, by discharging the model material to the model region of the K layer in a manner that the amount of the model material in the region positioned approximately immediately above the model region of the (K-1) layer becomes a lower amount, it is possible to set the energy absorbent concentration in the region to a low level and suppress temperature rise of the resin particles in the region when energy is applied. Therefore, it is possible to make the regions of the model region of the K layer not overlapping (i.e., not approximately immediately above) the model region of the (K-1) layer have the same temperature as the region overlapping the model region of the (K-1) layer and make the temperature in the model region of the K layer uniform. Hence, it is possible to make the melting condition of the resin particles in the model region of the K layer uniform, and make the amount of dent in the Z direction uniform in the model region of the K layer, making it possible to suppress sink of the model region (part) of the K layer.

In the second embodiment, the first model material and the second model material may have the same composition or different compositions. Use of the same composition is preferable because the configuration of the apparatus and the object forming processes can be simplified. Setting a lower energy absorbing capacity using the model material of the same composition can be achieved by setting the amount of the model material to be discharged to the position desired to have a lower energy absorbing capacity to a lower amount.

In the second embodiment, when setting the amount of the model material to be discharged to a lower amount, it is preferable to discharge the model material dividedly by a plurality of times. That is, in the second embodiment, it is preferable that the first model material and the second model material be the model materials having the same energy absorbing capacity, and that the discharging unit be configured to discharge the second model material of an amount dividedly by a plurality of times to the same position of a region intended to become a second model region of a second particle layer. This makes it smoother for the model material to permeate the region in the Z direction than when the model material of the same amount is discharged by one liquid droplet. This is considered due to that the model material permeates the region in the Z direction before liquid droplets of the model material adjoining each other in the XY directions combine with each other to make the model material wet and spread in the XY directions. That is, discharging the model material to the same position dividedly by a plurality of times makes it possible to suppress the model material from wetting and spreading in the XY directions and better improve the object formation accuracy of a three-dimensional object.

Here, the effect described above will be described in detail with reference to the drawings.

FIG. 17 is a view illustrating an example of how a model material permeates a region when setting the amount of the model material to be discharged to a lower amount according to an existing technique. As illustrated in FIG. 17, when simply the amount of the model material to be discharged is set to a lower amount (i.e., the model material of a lower amount is discharged at a breath) in order to set a lower energy absorbent concentration, the model material permeates the region in which the lower amount of the model material is desired, shallowly in the Z direction (gravity direction). Hence, according to the existing technique, the inter-particle layer force of binding the model parts between different particle layers is weak. This may degrade the strength of a three-dimensional object.

FIG. 18 is a view illustrating an example of how the model material permeates a region when setting the amount of the model material to be discharged to a lower amount according to the second embodiment. As illustrated in FIG. 18, in the second embodiment, when setting the amount of the model material to be discharged to a lower amount, the model material is discharged to the same position dividedly by a plurality of times. In the example illustrated in FIG. 18, the model material is discharged dividedly by four times in a manner that the total amount of the model material discharged is lower than the amounts to be discharged to other regions.

How to control discharging the model material to the model region of the K layer (i.e., how to determine the amount and the number of times of discharging) can be judged based on object formation data (sliced image data) of each layer. In this case, it is preferable to provide a step of determining the discharging conditions before the discharging step.

In the second embodiment, it is preferable to control the amount of the model material to be discharged, taking into consideration not only the relationship between the K layer and the (K-1) layer but also relationships with many other particle layers.

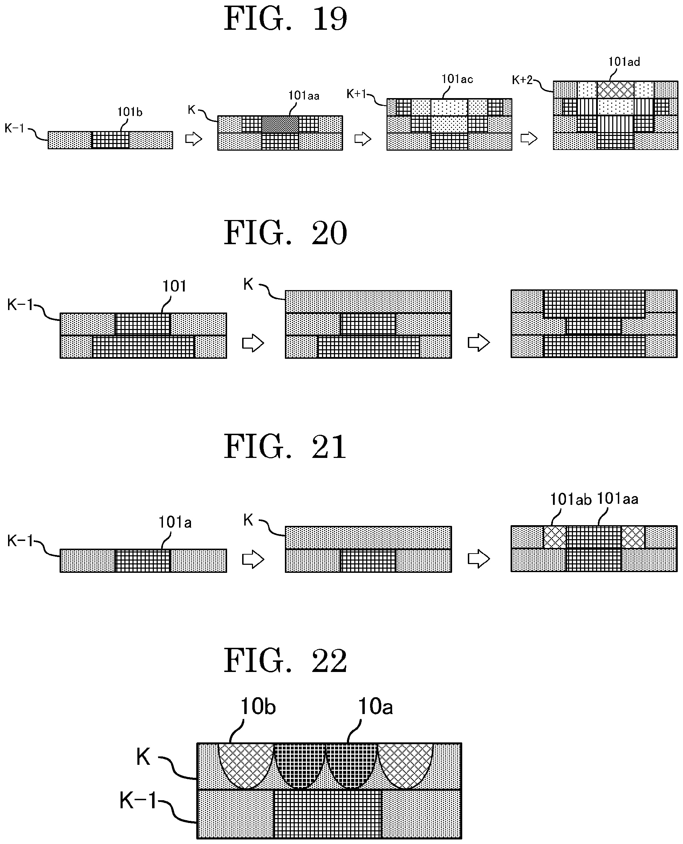

FIG. 19 is a view illustrating an example distribution of the model material when four particle layers are formed according to the second embodiment. As illustrated in FIG. 19, for example, the amount of the model material is set to 80% for a region 101aa positioned approximately immediately above the model region of the (K-1) layer within the model region of the K layer, and the amount of the model material is set to 100% for regions intended to constitute model regions for the first time in the K layer.

Regarding the (K+1) layer, the amount of the model material is set to 70% for a region 101ac positioned approximately immediately above the model region of the (K-1) layer, the amount of the model material is set to 80% for other regions that are positioned approximately immediately above the model regions of the K layer, and the amount of the model material is set to 100% for regions intended to constitute model regions for the first time in the (K+1) layer. Regarding the (K+2) layer, the amount of the model material is set to 60% for a region 101ad positioned approximately immediately above the model region of the (K-1) layer, and the amount of the model material is set to 70% for other regions that are positioned approximately immediately above the model regions of the (K+1) layer. In the same sense as varying the amount of the model material to be discharged in accordance with the height of object formation, it may be possible to vary the number of times by which the model material is discharged.

In this way, by varying the amount of the model material to be discharged in accordance with the height of object formation (the number of layers laminated) in consideration of the model regions of each layer, it is possible to make the melting condition of the resin particles in the model regions uniform per layer while making the melting condition of the resin particles uniform between the layers (in the layer lamination direction (Z direction)), making it possible to further improve the object formation accuracy of a three-dimensional object.

In the second embodiment, it is preferable that the three-dimensional object producing apparatus include a mechanism configured to sense the temperature in the particle layer, to perform control of adjusting the amount and the number of times by which the model material is discharged to the model region of the K layer based on the sensed temperature information. The temperature information to be sensed may be temperature information of the model region after energy is applied to the (K-1) layer, or temperature information of the model region after the K layer is formed by the layer forming unit. By performing control of adjusting the amount and the number of times by which the model material is discharged to the model region of the K layer based on the sensed temperature information, it is possible to prevent sink within the model region and improve the object formation accuracy of a three-dimensional object.

It can be considered that the temperature information of the model region of the K layer has temperature gradients at the regions corresponding to the ends of the model region of the (K-1) layer and the ends of the regions constituting model regions for the first time in the K layer. In this case, it is preferable to grade the amount and the number of times by which the model material is discharged (i.e., provide gradation to the amount of the model material) in accordance with the temperature gradients at the ends.

Further, in the second embodiment, it is preferable to provide a mechanism configured to sense the temperature of the model region again after energy is applied to the K layer. By measuring the temperature information (temperature distribution) under the condition that the distribution of the energy absorbent has been varied to make the melding condition of the resin particles uniform, it is possible to ascertain the actual temperature distribution and use the actual temperature distribution as a reference for controlling the amount and the number of times by which the model material is discharged to the particle layer to be formed next, making it possible to better improve the object formation accuracy of a three-dimensional object.

In addition, in the second embodiment, it is preferable that the three-dimensional object producing apparatus include a unit configured to sense the height of the model region after energy is applied to the K layer to control the amount and the number of times by which the model material is discharged to the model region in the particle layer to be formed next. By sensing the height of the model region formed, it is possible to ascertain whether the melting condition of the resin particles is uniform and whether sink has actually occurred, and control the amount and the number of times by which the model material is discharged to the particle layer to be formed next, making it possible to better improve the object formation accuracy of a three-dimensional object.

In the second embodiment, when the energy absorbing capacity of a first model region is X, it is preferable that the energy absorbing capacity of a second model region be less than or equal to 0.8X. Specifically, when the energy transmittance of a first model region is Y (%), it is preferable that the energy transmittance of a second model region be greater than or equal to Y/0.8 (%). This makes it possible to adjust the energy absorbing capacities in the model regions to more preferable capacities matching the object forming conditions, and better suppress deformation of a three-dimensional object.

### <Third embodiment>

In the third embodiment, the configuration of the apparatus is the same as in the first embodiment. Therefore, description of the configuration is skipped.

The problems of the existing technique in terms of the third embodiment will now be described in order to describe the effects of the present embodiment.

FIG. 20 is a view illustrating an example of how drooping of a model part (upper surface collapse) occurs when a second particle layer is formed over a first particle layer according to the existing technique. FIG. 20 describes the first particle layer as a (K-1) layer and the second particle layer as a K layer.

When a model region of the K layer is to be positioned above the model region of the (K-1) layer, there may be a case where energy that can melt the resin particles positioned on the surface of the (K-1) layer is applied to the model region 101 of the K layer in order to enhance the binding strength between the model regions of these particle layers. In this case, as illustrated in FIG. 20, according to the existing technique, a model region of the K layer positioned approximately immediately above the non-object forming region (i.e., a region that is not a model region) of the (K-1) layer is heated to the same temperature as a model region of the K layer positioned approximately immediately above the model region of the (K-1) layer. Hence, the existing technique has a problem that the model region of the K layer positioned approximately immediately above the non-object forming region of the (K-1) layer is heated more than needed, to cause the heat to melt the resin particles positioned on the surface of the (K-1) layer, to cause the solidified portion (model part) of the K layer droop from the intended position (upper surface collapse), to degrade the object formation accuracy of a three-dimensional object.

In the third embodiment, the discharging unit is configured to discharge a second model material A to form a second model region A of a second particle layer (K layer) positioned approximately immediately above a first model part, which is formed of the resin particles fused with each other in a first model region of a first particle layer ((K-1) layer). Further, in the third embodiment, the discharging unit is configured to form a second model region B positioned approximately immediately above a first adjoining region adjoining the first model region of the first particle layer, by discharging a second model material B such that the energy absorbing capacity is lower than the energy absorbing capacity of the second model region A. The "first adjoining region" refers to a region that adjoins the first model region and to which the model material is not discharged in the first particle layer. The first adjoining region is not limited to a region formed only of the resin particles, but may be a region to which, for example, an ink other than the model material has been discharged.

The third embodiment will be more specifically described with reference to the drawings.

FIG. 21 is a view illustrating an example distribution of the model material when the second particle layer is formed over the first particle layer according to the third embodiment. As illustrated in FIG. 21, in the third embodiment, for example, when the energy absorbing capacity of the model material discharged to a model region 101aa of the K layer positioned approximately immediately above the model region of the (K-1) layer is assumed to be 100%, the energy absorbing capacity of the model material discharged to model regions 101ab of the K layer positioned approximately immediately above the non-object forming regions of the (K-1) layer is 80%. This makes it possible to make a model region of the K layer less energy- absorbable when that model region has a non-object forming region approximately immediately below the model region and prevent transmission of excessive heat to the (K-1) layer to suppress upper surface collapse.

In the third embodiment, the second model material A and the second model material B may have the same composition or different compositions. Setting a lower energy absorbing capacity using the model material of the same composition can be achieved by, for example, setting the amount of the model material to be discharged to the position desired to have a lower energy absorbing capacity to a lower amount.

When using model materials having different compositions as the second model material A and the second model material B, for example, two kinds of model materials, namely, a model material having an energy absorbent concentration of 5 wt% (% by mass) and a model material having an energy absorbent concentration of 4 wt% may be prepared, and the model material having the energy absorbent concentration of 4 wt% may be discharged when setting a lower energy absorbent amount. This corresponds to discharging the model material at a concentration ratio of 80% with respect to a region to which the model material having the energy absorbent concentration of 5 wt% is discharged.

For example, as illustrated in FIG. 22, the third embodiment can be carried out by discharging the model material 10a having the energy absorbent concentration of 5 wt% to the model regions of the K layer positioned approximately immediately above the model region of the (K-1) layer and discharging the model material 10b having the energy absorbent concentration of 4 wt% to the model regions of the K layer positioned approximately immediately above the non-object forming regions of the (K-1) layer.

Setting a lower energy absorbing capacity using the model material of the same composition as the second model material A and the second model material B can be achieved by, for example, setting the amount of the model material to be discharged to the position desired to have a lower energy absorbing capacity to a lower amount. For example, when setting the amount of the energy absorbent to a lower amount, discharging the model material in an amount that is, for example, 80% of a standard model material discharging amount of 100% makes it possible to set the amount of the energy absorbent to 80%.

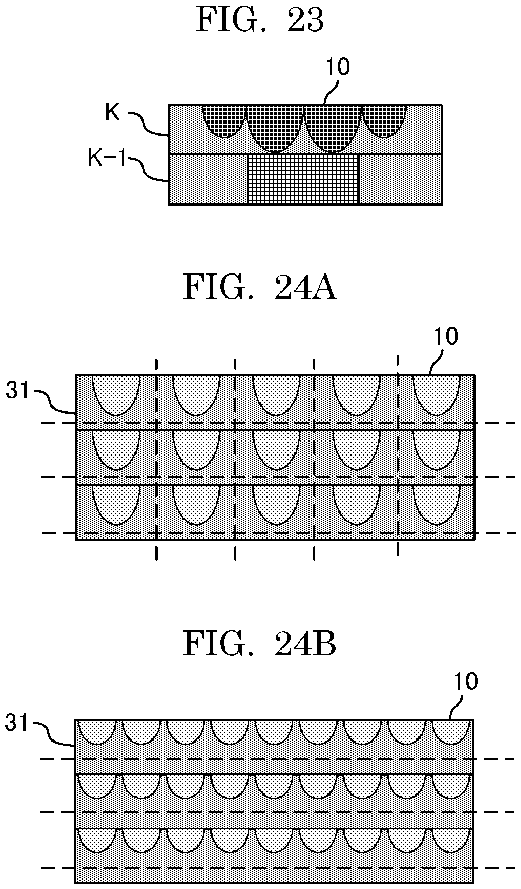

For example, as illustrated in FIG. 23, the third embodiment can be carried out by discharging the model material 10 by the standard discharging amount (100%) to the model regions of the K layer positioned approximately immediately above the model region of the (K-1) layer and discharging the model material 10 by the discharging amount of 80% to the model regions of the K layer positioned approximately immediately above the non-object forming regions of the (K-1) layer.

In the third embodiment, when setting the amount of the model material to be discharged to a lower amount, it is preferable to discharge the model material dividedly by a plurality of times. That is, in the third embodiment, it is preferable that the second model material A and the second model material B be the model materials having the same energy absorbing capacity, and that the discharging unit be configured to discharge the second model material B of an amount dividedly by a plurality of times to the same position of a region intended to become the second model region B of the second particle layer. This makes it smoother for the model material to permeate the region in the Z direction than when the model material of the same amount is discharged by one liquid droplet. This is considered due to that the model material permeates the region in the Z direction before liquid droplets of the model material adjoining each other in the XY directions combine with each other to make the model material wet and spread in the XY directions. That is, discharging the model material to the same position dividedly by a plurality of times makes it possible to suppress the model material from wetting and spreading in the XY directions and better improve the object formation accuracy of a three-dimensional object.

In the third embodiment, the method for setting a lower energy absorbing capacity has been described using the example of controlling the energy absorbing capacity. However, for example, it is possible to employ a method of setting the energy to be applied by the heating unit selectively to a lower level.

For example, when the heating unit is a laser beam, it is possible to set a lower energy absorbing capacity by setting the output power of the laser beam to a lower level.

In the third embodiment, when the energy absorbing capacity of the second model region A is X, it is preferable that the energy absorbing capacity of the second model region B be less than or equal to 0.8X. Specifically, when the energy transmittance of the second model region A is Y (%), it is preferable that the energy transmittance of the second model region B be greater than or equal to Y/0.8 (%). This makes it possible to adjust the energy absorbing capacities in the model regions to more preferable capacities matching the object forming conditions, and better suppress deformation of a three-dimensional object.

### <Fourth embodiment>

In the fourth embodiment, the configuration of the apparatus is the same as in the first embodiment. Therefore, description of the configuration is skipped.

The problems of the existing technique in terms of the fourth embodiment will now be described in order to describe the effects of the present embodiment.

For example, when a model material (light-absorbing ink) containing carbon black is discharged from an inkjet-type discharging head to a particle layer, the carbon black contained in the model material may coat the resin particles in the particle layer, to act to disturb melting and deformation of the resin particles. Therefore, if the model material is discharged to the particle layer more than needed, there may be a case where, for example, the resin particles do not fuse with each other sufficiently, to degrade the object formation accuracy of a three-dimensional object.

Hence, when discharging the model material to a particle layer, it is considered preferable to appropriately control the amount of the model material in a manner to enable the resin particles in the particle layer to fuse with each other when the particle layer is heated by the heating unit, and to discharge (locate) the model material to (in) the particle layer in a more dispersed state.

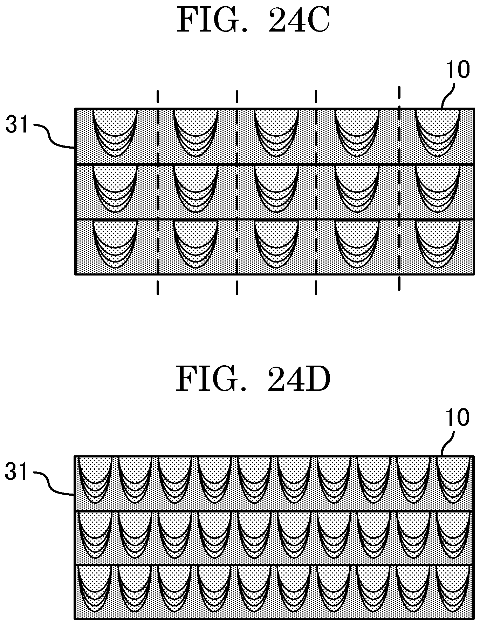

FIG. 24A is a diagram illustrating an example of a permeating state of the model material according to an existing technique to the fourth embodiment. FIG. 24B is a diagram illustrating another example of a permeating state of the model material according to an existing technique to the fourth embodiment. FIG. 24C is a diagram illustrating another example of a permeating state of the model material according to an existing technique to the fourth embodiment. FIG. 24D is a diagram illustrating another example of a permeating state of the model material according to an existing technique to the fourth embodiment.

FIG. 24A illustrates a case where the number of times by which the model material is discharged to the same position of the particle layer is set to one, and the model material is discharged in the equal amount to every position. FIG. 24B illustrates a case where the discharging amount per time is reduced from the case of FIG. 24A. FIG. 24C is a case where the number of times by which the model material is discharged to the same position of the particle layer is set to a plurality of times, and the model material is discharged dividedly by a plurality of times. FIG. 24D is another case of FIG. 24B, where the model material is discharged by a plurality of times to the same position as in FIG. 24C.

In the example illustrated in FIG. 24A, not only is the permeation depth of the model material 10 insufficient, i.e., the model material does not permeate each particle layer 31 down to the lower surface, but also each particle layer 31 periodically has positions to which the model material 10 is not applied in the plane direction (in the left-right direction of FIG. 24A, XY directions) of the particle layer. Therefore, in the example illustrated in FIG. 24A, it is assumable that the model material 10 is periodically not applied to some positions in the layer lamination direction (in the upward-downward direction of FIG. 24A, Z direction) and the plane direction of the particle layers 31, to form a periodic structure (layer structure) in the strength distribution of a three-dimensional object, to make the strength of the three-dimensional object insufficient.

In the example illustrated in FIG. 24B, the amount by which the model material 10 is discharged per time is reduced from the example illustrated in FIG. 24A, and the model material 10 is discharged densely in the plane direction of the particle layer 31. Therefore, in the example illustrated in FIG. 24B, it can be considered that the strength of the particle layer 31 in the plane direction is better improved than in the case illustrated in FIG. 24A.

However, in the example illustrated in FIG. 24B, because the amount by which the model material 10 is discharged per time is low, the permeation depth of the model material 10 is more insufficient. Therefore, in the example illustrated in FIG. 24B, it is assumable that the model material 10 is periodically not applied to some positions in the layer lamination direction (in the upward-downward direction of FIG. 24B, Z direction) of the particle layers 31, to form a periodic structure (layer structure) in the strength distribution of a three-dimensional object, to make the strength of the three-dimensional object in the layer lamination direction insufficient.

In the example illustrated in FIG. 24C, the amount by which the model material 10 is discharged per time is reduced from the example illustrated in FIG. 24A, and the model material is discharged dividedly by a plurality of times to the same position of the particle layer 31. Therefore, in the example illustrated in FIG. 24C, it can be considered that the strength of the particle layer 31 in the layer lamination direction is better improved than in the case illustrated in FIG. 24A.

However, in the example illustrated in FIG. 24C, it is assumable that the model material 10 is periodically not applied to some positions in the plane direction (in the left-right direction of FIG. 24C, XY directions) of each particle layer 31, to form a periodic structure (layer structure) in the strength distribution of a three-dimensional object, to make the strength of the three-dimensional object in the plane direction of the particle layer insufficient.

In the example illustrated in FIG. 24D, the model material 10 is discharged by a plurality of times to the same position of a particle layer, as compared with the example illustrated in FIG. 24B. Therefore, in the example illustrated in FIG. 24D, it can be considered that the particle layer 31 has less positions or a smaller area to which the model material 10 is not applied.

However, in the example illustrated in FIG. 24D, as described above, it is assumable that the model material 10 applied more than needed may coat the resin particles and act to disturb melting and deformation of the resin particle, to make fusing of the resin particles with each other insufficient and degrade the object formation accuracy of a three-dimensional object.

In the fourth embodiment, when discharging the model material to a region intended to be a model region in the same particle layer, the discharging unit is configured to discharge the model material in a manner that the model material is discharged by different numbers of times to positions adjoining each other among the positions to which the model material is to be discharged within the region intended to be the model region. In other words, in the fourth embodiment, when discharging the model material to a region intended to be a model region, for at least one pair of adjoining dots within the region intended to be the model region, the model material is discharged to the respective dots by varying the number of times (number of times of discharging, or number by which discharging is divided) by which the model material is discharged. That is, in the fourth embodiment, "portions (regions) adjoining each other in the model region" in the first to third embodiments are changed to "positions (dots) adjoining each other within the model region".

In this way, it is possible to suppress formation of a periodic structure (layer structure) in the strength distribution of a three-dimensional object and improve the strength of the three-dimensional object.

In the fourth embodiment, when the layer forming unit forms a second particle layer over a first particle layer, it is preferable that the discharging unit be configured to discharge the model material to a second discharging position in a manner that the number of times by which the model material is discharged is varied between a first discharging position and the second discharging position, where the first discharging position is the position to which the model material is discharged in the first particle layer and the second discharging position is the position in the second particle layer approximately immediately above the first discharging position.

This makes it possible to appropriately promote melting of the resin particles and fusing of the resin particles with each other without wastefully applying energy to the particle layers, making it possible to increase the density of a three-dimensional object and better improve the strength of the three-dimensional object.

Furthermore, in the fourth embodiment, it is preferable that the discharging unit be configured to discharge the model material to the second discharging position in a manner that the energy absorbing capacity at the second discharging position is lower than the energy absorbing capacity at the first discharging position.

This makes the second discharging position less susceptible to temperature elevation than the first discharging position, making it possible to suppress warpage of a three-dimensional object and improve uniformity of melting and bonding during formation of the three-dimensional object.

The fourth embodiment will be more specifically described with reference to the drawings.

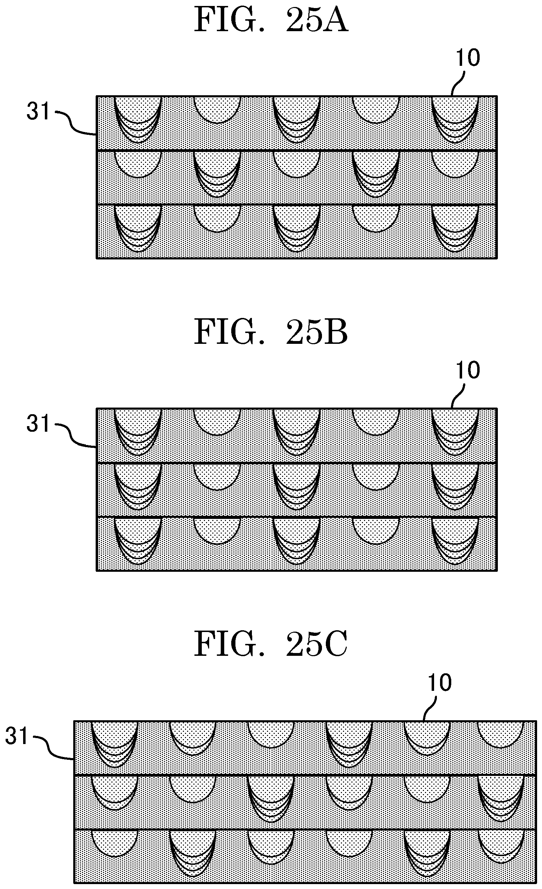

FIG. 25A is a diagram illustrating a permeating state of the model material in the fourth embodiment. As illustrated in FIG. 25A, in the fourth embodiment, for example, the model material 10 is discharged in a manner that the number of times by which the model material 10 is discharged is one and the number of times by which the model material 10 is discharged is a plurality of times are alternated for positions adjoining each other among the positions to which the model material 10 is discharged in the same particle layer 31.

Further, in the example illustrated in FIG. 25A, the number of times by which the model material 10 is discharged is one and the number of times by which the model material 10 is discharged is a plurality of times are alternated for positions adjoining each other in the layer lamination direction among the positions to which the model material 10 is discharged.

Hence, as described above, it is possible to appropriately promote melting of the resin particles and fusing of the resin particles with each other without wastefully applying energy to the particle layers, making it possible to increase the density of a three-dimensional object and better improve the strength of the three-dimensional object.

FIG. 25B is a diagram illustrating another example of a permeating state of the model material in the fourth embodiment. As illustrated in FIG. 25B, in the fourth embodiment, for example, unlike the example illustrated in FIG. 25A, the positions at which the number of times by which the model material 10 is discharged is one adjoin each other in the layer lamination direction, and the positions at which the number of times by which the model material 10 is discharged is a plurality of times adjoin each other in the layer lamination direction, respectively, among positions to which the model material 10 is discharged.

Also in the example illustrated in FIG. 25B, as described above, it is possible to suppress formation of a periodic structure (layer structure) in the strength distribution of a three-dimensional object and improve the strength of the three-dimensional object.

FIG. 25C is a diagram illustrating another example of a permeating state of the model material in the fourth embodiment. In the fourth embodiment, for example, the number of times by which the model material 10 is discharged to the positions to which the model material 10 is discharged is not limited to being set to two tiers (two levels) as illustrated in FIG. 25C, but may be set to three tiers (three levels). In this way, in the fourth embodiment, the number of times by which the model material is discharged to the positions to which the model material is discharged is not particularly limited so long as the number of times is set to two or more ties. However, it is preferable to set a greater number of tiers.

In the example illustrated in FIG. 25C, the number of times by which the model material is discharged to the positions to which the model material is discharged is set to three tiers, making it possible to better suppress formation of a periodic structure (layer structure) in the strength distribution of a three-dimensional object and better improve the strength of the three-dimensional object than in the example illustrated in FIG. 25A.

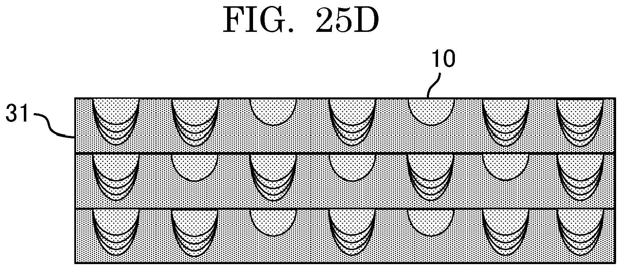

FIG. 25D is a diagram illustrating another example of a permeating state of the model material in the fourth embodiment. As illustrated in FIG. 25D, in the fourth embodiment, for example, it is preferable to discharge the model material 10 by a plurality of times to end portions of a model region (end portions of a model part).

In the example illustrated in FIG. 25D, it is possible to apply the model material in a greater amount to the end portions of the model region and more securely fuse the resin particles located at the end portions of the model region, making it possible to better improve the object formation accuracy of a three-dimensional object.

As described above, the three-dimensional object producing apparatus of the present disclosure includes the layer forming unit configured to form a particle layer containing resin particles, the discharging unit configured to discharge a model material capable of absorbing energy to the particle layer to form a model region, and a heating unit configured to heat the particle layer in which the model region is formed through application of energy, to fuse the resin particles in the model region with each other. The discharging unit discharges the model material in a manner that portions adjoining each other in the model region are varied in energy absorbing capacity

Hence, the three-dimensional object producing apparatus of the present disclosure can suppress deformation of a three-dimensional object formed by heating the resin particles and improve the object formation accuracy of the three-dimensional object.

Aspects of the present disclosure are, for example, as follows.
<1> A three-dimensional object producing apparatus including:
   a layer forming unit configured to form a particle layer containing resin particles;
   a discharging unit configured to discharge a model material capable of absorbing energy to the particle layer to form a model region; and
   a heating unit configured to heat the particle layer in which the model region is formed through application of the energy, to fuse the resin particles in the model region with each other,
   wherein the discharging unit discharges the model material in a manner that portions adjoining each other in the model region are varied in capacity for absorbing the energy.
<2> The three-dimensional object producing apparatus according to <1>,
   wherein before the heating unit applies the energy, the discharging unit discharges a first model material to a first particle layer formed by the layer forming unit to form a first model region and discharges a second model material having capacity for absorbing the energy higher than capacity of the first model material for absorbing the energy to a second particle layer positioned approximately immediately above the first model region to form a second model region.
<3> The three-dimensional object producing apparatus according to <2>,
   wherein when the capacity of the second model material for absorbing the energy is X, the capacity of the first model material for absorbing the energy is less than or equal to 0.8X.
<4> The three-dimensional object producing apparatus according to <2> or <3>,
   wherein when transmittance of the energy through the second model material is Y (%), transmittance of the energy through the first model material is greater than or equal to Y/0.8 (%).
<5> The three-dimensional object producing apparatus according to any one of <2> to <4>,
   wherein the layer forming unit forms the second particle layer after the layer forming unit forms the first particle layer and the discharging unit forms the first model region.
<6> The three-dimensional object producing apparatus according to <1>,
   wherein when the layer forming unit forms a second particle layer over a first particle layer, the discharging unit forms a second model region to be positioned approximately immediately above a first model part, which is formed of the resin particles fused with each other in a first model region of the first particle layer, by discharging a second model material such that capacity for absorbing the energy is lower than a first model material discharged to form the first model region of the first particle layer.
<7> The three-dimensional object producing apparatus according to <6>,
   wherein when capacity of the first model region for absorbing the energy is X, capacity of the second model region for absorbing the energy is less than or equal to 0.8X.
<8> The three-dimensional object producing apparatus according to <6> or <7>,
   wherein the first model material and the second model material are the model materials equal in capacity for absorbing the energy, and
   wherein the discharging unit discharges the second model material dividedly by a plurality of times to a same position of a region of the second particle layer intended to become the second model region.
<9> The three-dimensional object producing apparatus according to <1>,
   wherein when the layer forming unit forms a second particle layer over a first particle layer, the discharging unit forms a second model region A of the second particle layer to be positioned approximately immediately above a first model part, which is formed of the resin particles fused with each other in a first model region of the first particle layer, by discharging a second model material A, and forms a second model region B to be positioned approximately immediately above a first adjoining region adjoining the first model region of the first particle layer by discharging a second model material B such that capacity of the second model region B for absorbing the energy is lower than capacity of the second model region A for absorbing the energy.
<10> The three-dimensional object producing apparatus according to <9>,
   wherein when the capacity of the second model region A for absorbing the energy is X, the capacity of the second model region B for absorbing the energy is less than or equal to 0.8X.
<11> The three-dimensional object producing apparatus according to <9> or <10>,
   wherein the second model material A and the second model material B are the model materials equal in capacity for absorbing the energy, and
   wherein the discharging unit discharges the second model material B dividedly by a plurality of times to a same position of a region of the second particle layer intended to become the second model region B.
<12> The three-dimensional object producing apparatus according to <1>,
   wherein when discharging the model material to a region intended to be the model region in a same particle layer, the discharging unit discharges the model material in a manner that the model material is discharged by different numbers of times to positions adjoining each other among positions to which the model material is to be discharged within the region intended to be the model region.
<13> The three-dimensional object producing apparatus according to <12>,
   wherein when the layer forming unit forms a second particle layer over a first particle layer, the discharging unit discharges the model material to a second discharging position in a manner that a number of times by which the model material is discharged is varied between a first discharging position and the second discharging position, where the first discharging position is a position to which the model material is discharged in the first particle layer and the second discharging position is a position in the second particle layer approximately immediately above the first discharging position.
<14> The three-dimensional object producing apparatus according to <13>,
   wherein the discharging unit discharges the model material to the second discharging position in a manner that capacity for absorbing the energy at the second discharging position is lower than capacity for absorbing the energy at the first discharging position.
<15> A three-dimensional object producing method including:
   forming a particle layer containing resin particles:
   discharging a model material capable of absorbing energy to the particle layer to form a model region; and
   heating the particle layer in which the model region is formed through application of the energy, to fuse the resin particles in the model region with each other,
   wherein the discharging includes discharging the model material in a manner that portions adjoining each other in the model region are varied in capacity for absorbing the energy.

The three-dimensional object producing apparatus according to any one of <1> to <14> and the three-dimensional object producing method according to <15> can solve the various problems in the related art and achieve the object of the present disclosure.

## Claims

1. A three-dimensional object producing apparatus comprising:
a layer forming unit configured to form a particle layer that comprises resin particles;
a discharging unit configured to discharge a model material capable of absorbing energy to the particle layer to form a model region; and
a heating unit configured to heat the particle layer in which the model region is formed through application of the energy, to fuse the resin particles in the model region with each other,
wherein the discharging unit discharges the model material in a manner that portions adjoining each other in the model region are varied in capacity for absorbing the energy.

2. The three-dimensional object producing apparatus according to claim 1,
wherein before the heating unit applies the energy, the discharging unit discharges a first model material to a first particle layer formed by the layer forming unit to form a first model region and discharges a second model material having capacity for absorbing the energy higher than capacity of the first model material for absorbing the energy to a second particle layer positioned approximately immediately above the first model region to form a second model region.

3. The three-dimensional object producing apparatus according to claim 2,
wherein when the capacity of the second model material for absorbing the energy is X, the capacity of the first model material for absorbing the energy is less than or equal to 0.8X.

4. The three-dimensional object producing apparatus according to claim 2 or 3,
wherein when transmittance of the energy through the second model material is Y (%), transmittance of the energy through the first model material is greater than or equal to Y/0.8 (%).

5. The three-dimensional object producing apparatus according to any one of claims 2 to 4,
wherein the layer forming unit forms the second particle layer after the layer forming unit forms the first particle layer and the discharging unit forms the first model region.

6. The three-dimensional object producing apparatus according to claim 1,
wherein when the layer forming unit forms a second particle layer over a first particle layer, the discharging unit forms a second model region to be positioned approximately immediately above a first model part, which is formed of the resin particles fused with each other in a first model region of the first particle layer, by discharging a second model material such that capacity for absorbing the energy is lower than a first model material discharged to form the first model region of the first particle layer.

7. The three-dimensional object producing apparatus according to claim 6,
wherein when capacity of the first model region for absorbing the energy is X, capacity of the second model region for absorbing the energy is less than or equal to 0.8X.

8. The three-dimensional object producing apparatus according to claim 6 or 7,
wherein the first model material and the second model material are the model materials equal in capacity for absorbing the energy, and
wherein the discharging unit discharges the second model material dividedly by a plurality of times to a same position of a region of the second particle layer intended to become the second model region.

9. The three-dimensional object producing apparatus according to claim 1,
wherein when the layer forming unit forms a second particle layer over a first particle layer, the discharging unit forms a second model region A of the second particle layer to be positioned approximately immediately above a first model part, which is formed of the resin particles fused with each other in a first model region of the first particle layer, by discharging a second model material A, and forms a second model region B to be positioned approximately immediately above a first adjoining region adjoining the first model region of the first particle layer by discharging a second model material B such that capacity of the second model region B for absorbing the energy is lower than capacity of the second model region A for absorbing the energy.

10. The three-dimensional object producing apparatus according to claim 9,
wherein when the capacity of the second model region A for absorbing the energy is X, the capacity of the second model region B for absorbing the energy is less than or equal to 0.8X.

11. The three-dimensional object producing apparatus according to claim 9 or 10,
wherein the second model material A and the second model material B are the model materials equal in capacity for absorbing the energy, and
wherein the discharging unit discharges the second model material B dividedly by a plurality of times to a same position of a region of the second particle layer intended to become the second model region B.

12. wherein when discharging the model material to a region intended to be the model region in a same particle layer, the discharging unit discharges the model material in a manner that the model material is discharged by different numbers of times to positions adjoining each other among positions to which the model material is to be discharged within the region intended to be the model region.

13. The three-dimensional object producing apparatus according to claim 12,
wherein when the layer forming unit forms a second particle layer over a first particle layer, the discharging unit discharges the model material to a second discharging position in a manner that a number of times by which the model material is discharged is varied between a first discharging position and the second discharging position, where the first discharging position is a position to which the model material is discharged in the first particle layer and the second discharging position is a position in the second particle layer approximately immediately above the first discharging position.

14. The three-dimensional object producing apparatus according to claim 13,
wherein the discharging unit discharges the model material to the second discharging position in a manner that capacity for absorbing the energy at the second discharging position is lower than capacity for absorbing the energy at the first discharging position.

15. A three-dimensional object producing method comprising:
forming a particle layer that comprises resin particles:
discharging a model material capable of absorbing energy to the particle layer to form a model region; and
heating the particle layer in which the model region is formed through application of the energy, to fuse the resin particles in the model region with each other,
wherein the discharging comprises discharging the model material in a manner that portions adjoining each other in the model region are varied in capacity for absorbing the energy.
